# EUROPEAN PATENT APPLICATION

(11) **EP 4 624 870 A1**
(43) Date of publication of application: **01.10.2025**
(21) Application number: 23894352.6
(22) Date of filing: 25.10.2023
(51) Int. Cl.: G01D 5/20

(54) **POSITION DETECTION DEVICE**

(30) Priority: 24.11.2022 JP 2022187596
(71) Applicant: DENSO CORPORATION, Kariya-city, Aichi 448-8661 (JP)
(72) Inventor: KONO, Tsukasa, Kariya-city Aichi 448-8661 (JP); KOBAYASHI, Atsushi, Kariya-city Aichi 448-8661 (JP); MURAYAMA, Ryosuke, Kariya-city Aichi 448-8661 (JP); SUGITO, Tatsuaki, Kariya-city Aichi 448-8661 (JP)
(74) Representative: Kuhnen & Wacker Patent- und Rechtsanwaltsbüro PartG mbB
(86) International application number: PCT/JP2023/038570
(87) International publication number: WO 2024/111340

(57) **Abstract**

A position detection device includes a substrate (100), a transmitter coil (110) formed in the substrate, and first and second receiver coils (120, 130) formed in the substrate and inductively coupled by electromagnetic induction caused by energizing the transmitter coil. The substrate is a multilayer substrate with six or more wiring layers (102, 1001-1010) and insulating layers (101) alternately arranged between each of the six or more wiring layers. The substrate includes a plurality of conductive penetrating portions (140, 1401-1407) each formed to penetrate at least one of the insulating layers so as to connect the six or more wiring layers. Each of the first and second receiver coils is wound a plurality of turns in each wiring layer, excluding at least one wiring layer, among the six or more wiring layers, and is connected through the conductive penetrating portions. At least one of the conductive penetrating portions is disposed inside each of the first and second receiver coils.

## Description

### CROSS REFERENCE TO RELATED APPLICATION

This application is based on Japanese Patent Application No. 2022-187596 filed on November 24, 2022, the contents of which are incorporated herein by reference.

### TECHNICAL FIELD

The present disclosure relates to a position detection device.

### BACKGROUND

Conventionally, there has been known an angular position sensor that detects a position of a detection object that is rotatable (see, for example, Patent Literature 1). The angular position sensor has two excitation coils and two sensing coils. The angular position sensor generates a magnetic field between the two excitation coils and the detection object by supplying current to the two excitation coils, and detects a rotation angle of the detection object based on a detection signal generated by the change in the magnetic field. The two excitation coils and the two sensing coils are formed on a four-layered substrate. Specifically, of the two excitation coils, one excitation coil is formed on first and second layers, and the other excitation coil is formed on third and fourth layers.

Moreover, each of the two sensing coils is formed in series from the first layer through the second and third layers to the fourth layer. Each of the two sensing coils has a portion formed by winding four turns in a clockwise or counterclockwise direction in each layer, for a total of sixteen turns. Each of the two sensing coils has a portion that is wound clockwise or counterclockwise in each of the four layers, and the portions are electrically connected through one of the three vias that penetrate from the first layer to the fourth layer of the multilayer substrate.

### PRIOR ART LITERATURE

### PATENT LITERATURE

Patent Literature 1: WO 2022/015363 A

### SUMMARY OF INVENTION

The inventors have investigated a position detection device that uses a transmitter coil functioning as an excitation coil and a receiver coil functioning as a sensing coil, and that allows the total number of turns of the receiver coil to be increased. The total number of turns of the receiver coil is the sum of the total number of turns of the receiver coil wound on each layer of a multilayer substrate. As a method to increase the total number of turns of the receiver coil, there is a method of increasing the number of layers of the multilayer substrate, as well as increasing the number of turns of the receiver coil formed in each layer of the multilayer substrate with increased layers.

However, according to the diligent study by the inventors, forming through-conductive parts such as vias that penetrate all layers of the multilayer substrate leads to a reduction in area available for forming the receiver coil in each layer due to the through-conductive parts. This limits the number of turns of the receiver coil in each layer, and it may not be possible to increase the total number of turns of the receiver coil to the desired number.

An object of the present disclosure is to provide a position detection device that can ensure sufficient area for forming receiver coils.

According to one aspect of the present disclosure, a position detection device includes a substrate, a transmitter coil formed in the substrate, and a first receiver coil and a second receiver coil formed in the substrate and inductively coupled by electromagnetic induction caused by energization to the transmitter coil. The substrate is a multilayer substrate with six or more wiring layers and insulating layers alternately arranged between each of the six or more wiring layers. The substrate includes a plurality of conductive penetrating portions each of which is formed to penetrate at least one of the insulating layers so that the plurality of conductive penetrating portions connect the six or more wiring layers. Each of the first receiver coil and the second receiver coil is wound a plurality of turns in each wiring layer, excluding at least one wiring layer, among the six or more wiring layers, and is connected through the plurality of conductive penetrating portions. At least one of the plurality of conductive penetrating portions is disposed inside each of the first receiver coil and the second receiver coil.

According to this configuration, compared to a case where the first receiver coil and the second receiver coil are formed on all six or more wiring layers, the number of conductive penetrating portions for connecting the first receiver coil and the second receiver coil can be reduced. Therefore, in each of the wiring layers in which the first receiver coil and the second receiver coil are formed, the area available for forming the first receiver coil and the second receiver coil can be increased.

Note that reference numerals in parentheses attached to components and the like indicate an example of correspondence between the components and the like and specific components and the like described in an embodiment to be described below.

### BRIEF DESCRIPTION OF DRAWINGS

FIG. 1 is a block diagram of an electrification system configured using a position detection device of a first embodiment;
FIG. 2 is a diagram showing a relationship between the position detection device and a drive unit;
FIG. 3 is a top view of a rotating flat plate and the position detection device;
FIG. 4 is a perspective view of the position detection device;
FIG. 5 is a cross-sectional view of the position detection device taken along line V-V of FIG. 4;
FIG. 6 is a plan view of a printed circuit board according to the first embodiment, as seen in the direction indicated by arrow VI in FIG. 5;
FIG. 7 is a block diagram of the position detection device;
FIG. 8 is a cross-sectional view of the printed circuit board according to the first embodiment;
FIG. 9 is a diagram for explaining the configuration of wiring layers, a first receiver coil, and vias in the printed circuit board of the first embodiment;
FIG. 10 is a diagram for explaining a connection of the first receiver coil formed in each wiring layer in the printed circuit board of the first embodiment;
FIG. 11 is a diagram for explaining the configuration of wiring layer, a first receiver coil, and vias in a printed circuit board of a comparative example;
FIG. 12 is a diagram for explaining an area in which vias can be formed in the printed circuit board of the comparative example;
FIG. 13 is a diagram for explaining the configuration of wiring layers, a first receiver coil, and vias in a printed circuit board of a second embodiment;
FIG. 14 is a view corresponding to FIG. 6 of the printed circuit board of the second embodiment;
FIG. 15 is a diagram for explaining the configuration of wiring layers, a first receiver coil, and vias in a printed circuit board of a third embodiment;
FIG. 16 is a view corresponding to FIG. 6 of the printed circuit board of the third embodiment; and
FIG. 17 is a view corresponding to FIG. 6 of a printed circuit board of a fourth embodiment.

### DESCRIPTION OF EMBODIMENTS

Hereinafter, embodiments of the present disclosure will be described with reference to the drawings. In the following embodiments, parts that are the same as or equivalent to parts described in the preceding embodiment are denoted by the same reference numerals, and description thereof may be omitted. When only a part of components is described in the embodiment, components described in the preceding embodiment can be applied to other parts of the components. The following embodiments may be partially combined with each other even if such a combination is not explicitly described as long as there is no disadvantage with respect to such a combination.

### (First Embodiment)

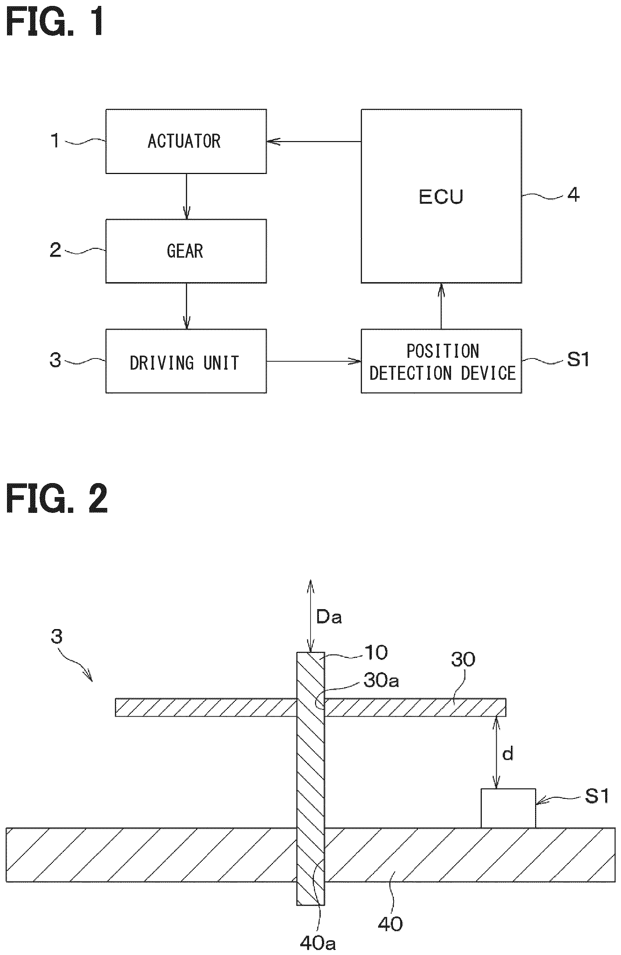

The present embodiment will be described with reference to FIGS. 1 to 12. In the present embodiment, as a position detection device, a position detection device that detects rotation of a detection object will be described as an example. In the present embodiment, an example in which the position detection device is applied to an electrification system mounted on a vehicle will be described.

### [Electrification System]

The electrification system, as shown in FIG. 1 for example, includes an actuator 1, a gear 2, a drive unit 3, an ECU (abbreviation of Electronic Control Unit) 4, and a position detection device S1. The electrification system is operated as follows. That is, the actuator 1 is controlled by the ECU 4, and rotates the gear 2 under the control of the ECU 4. The drive unit 3 includes a detection object to be described later, and includes components operated by the rotation of the gear 2. The position detection device S1 detects a displacement of the detection object provided in the drive unit 3, and outputs a detection signal to the ECU 4. In the present embodiment, as will be described later, the detection object includes a rotating flat plate 30, and a rotation angle of the rotating flat plate 30 is output to the ECU 4. The ECU 4 controls the actuator 1 in view of the detection signal from the position detection device S1.

Next, a configuration of the drive unit 3 in which the position detection device S1 is disposed will be described. In the present embodiment, an example in which the position detection device S1 is disposed in a motor such as a main motor and an in-wheel motor will be described.

The drive unit 3 is assumed to be, for example, a rotor for a motor, and as shown in FIG. 2, includes a shaft 10 as a rotating shaft, the rotating flat plate 30, a fixing base 40, and the like. These components 10, 30, 40 are arranged coaxially with an axial direction Da of the shaft 10 as the center. In the following description, the axial direction Da of the shaft 10 will be simply referred to as the axial direction Da. In addition, for ease of viewing, FIG. 2 shows a diagram in which a transmitter coil 110, a first receiver coil 120, and a second receiver coil 130, which are described below and which constitute the position detection device S1, are omitted.

The shaft 10 is, for example, a drive shaft, and is made of a cylindrical member. The shaft 10 is disposed so that a tire is provided on one end side and the other end side opposite to the one end side becomes the vehicle body side. For example, in FIG. 2, the upper side of the paper corresponds to the one end side of the shaft 10, and the lower side of the paper corresponds to the other end side of the shaft 10. Although details are omitted, for example, a rotating wheel and a bearing member (not shown) are attached to the shaft 10, and the rotating wheel is supported by the bearing member in a rotatable state.

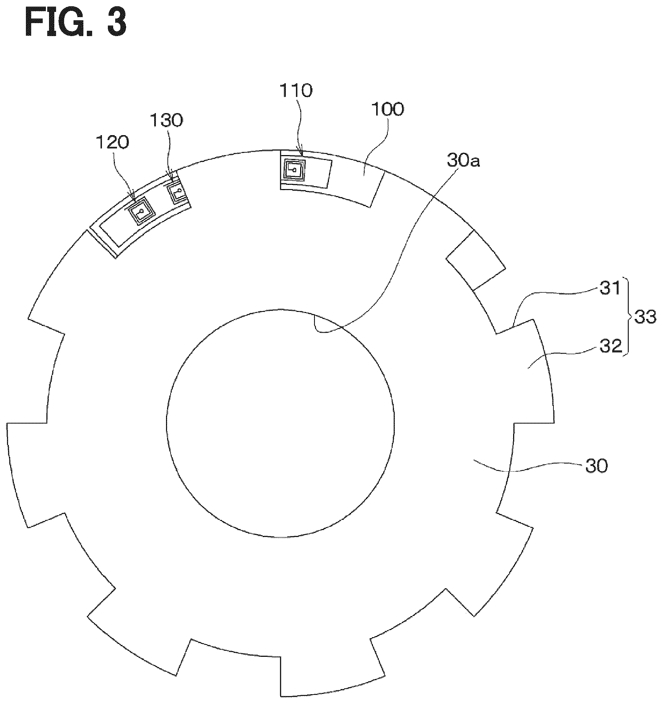

The rotating flat plate 30 is made of metal, and has an annular plate shape having a through hole 30a. As shown in FIG. 3, the rotating flat plate 30 of the present embodiment has a plurality of depression portions 31 provided in an outer edge thereof at an equal interval in a circumferential direction. In other words, the rotating flat plate 30 has a configuration in which a plurality of protrusion portions 32 are disposed along the circumferential direction in the outer edge portion. That is, in the rotating flat plate 30, a depression and protrusion structure 33 having the depression portions 31 and the protrusion portions 32 is provided along the circumferential direction in the outer edge portion.

As shown in FIG. 2, the rotating flat plate 30 is fixed to the shaft 10 with one end of the shaft 10 inserted into the through hole 30a so as to rotate with the rotation of the shaft 10. In the present embodiment, the rotating flat plate 30 corresponds to the detection object.

The fixing base 40 has a plate shape having a through hole 40a. The other end of the shaft 10 is inserted into the through hole 40a of the fixing base 40, and the rotating wheel (not shown) is disposed in a rotatable state. On the fixing base 40, the position detection device S1 is disposed to face the protrusion portion 32 of the rotating flat plate 30 in the axial direction Da. As shown in FIG. 3, the position detection device S1 is disposed so as to have a predetermined gap (that is, a predetermined distance) d between the position detection device S1 and the rotating flat plate 30.

### [Position Detection Device]

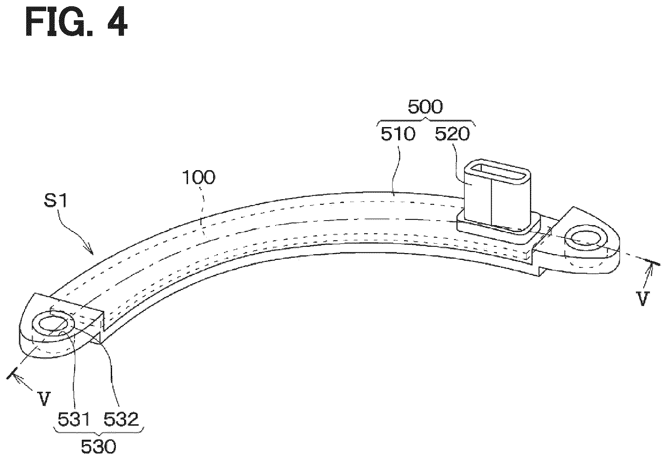

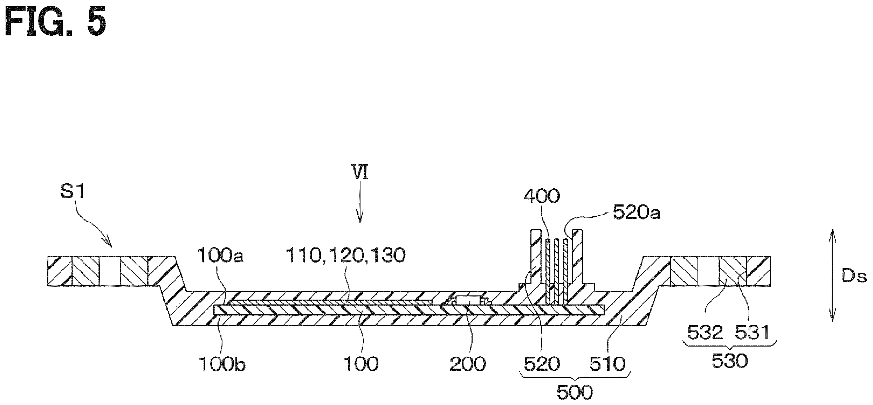

Next, a configuration of the position detection device S1 of the present embodiment will be described. As shown in FIGS. 4 and 5, the position detection device S1 of the present embodiment includes a printed circuit board 100 having one surface 100a and the other surface 100b. In the position detection device S1, a circuit board 200 and terminals 400 are disposed on one surface 100a side of the printed circuit board 100, and these are integrally sealed by a sealing member 500. In the following description, the normal direction Ds to a surface direction of the printed circuit board 100 will be simply referred to as the normal direction Ds. When the position detection device S1 is disposed on the fixing base 40, the normal direction Ds of the printed circuit board 100 coincides with the axial direction Da. Although not particularly shown, various electronic components such as capacitors and resistors are appropriately disposed in the printed circuit board 100.

The printed circuit board 100 of the present embodiment has an arc plate shape. Specifically, the printed circuit board 100 is configured to coincide with an arc of a virtual circle formed around the shaft 10. That is, the printed circuit board 100 has a shape in which a virtual circle having the printed circuit board 100 as an arc coincides with a circle formed around the shaft 10.

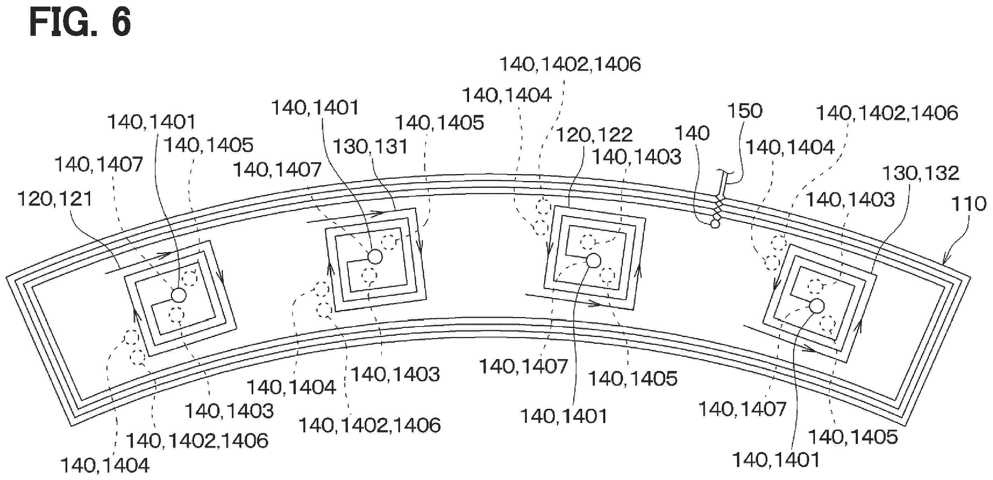

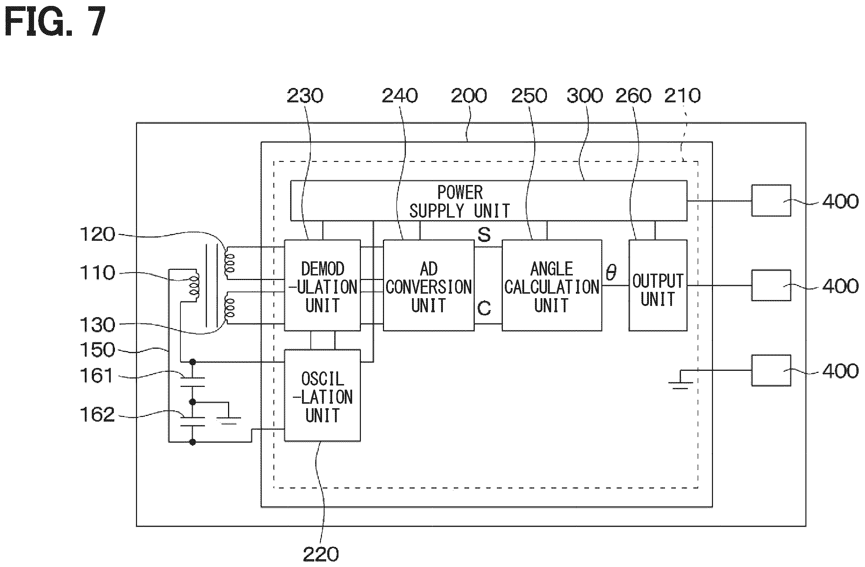

As shown in FIG. 6, the transmitter coil 110, the first receiver coil 120, and the second receiver coil 130 are disposed in the printed circuit board 100. As shown in FIG. 7, the printed circuit board 100 also has a connection wire 150 that connects the circuit board 200 to the transmitter coil 110, the first receiver coil 120, and the second receiver coil 130. It should be noted that, in FIG. 5, the transmitter coil 110, the first receiver coil 120, and the second receiver coil 130 are shown in a simplified manner.

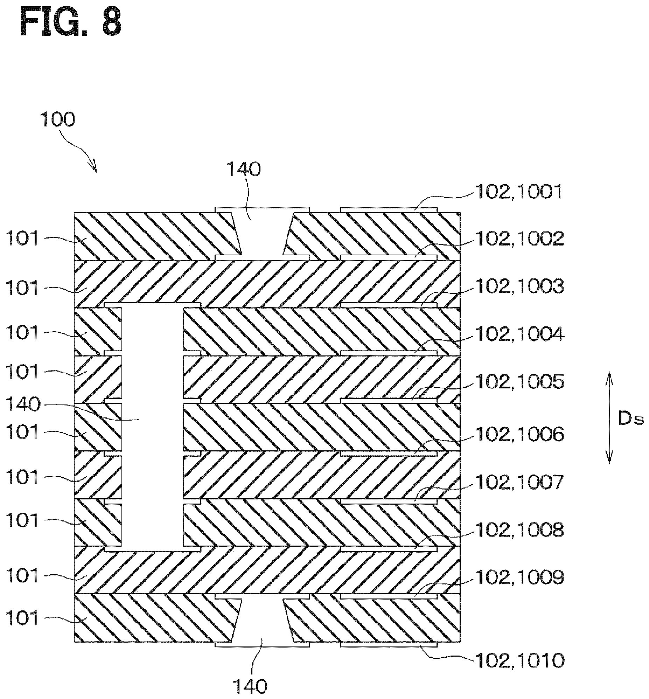

Specifically, the printed circuit board 100 of the present embodiment is a multilayer substrate in which insulating layers 101 and wiring layers 102 are alternately laminated, as shown in FIG. 8. The printed circuit board 100 of the present embodiment has a six-layer through substrate in which insulating layers 101 and wiring layers 102 are alternately laminated. The printed circuit board 100 is composed of a ten-layer build-up substrate in which two insulating layers 101 and two wiring layers 102 are further laminated on both of one side and the other side of the through substrate in the normal direction Ds. The six-layer through substrate is also called a core layer. A layer consisting of one insulating layer 101 and one wiring layer 102 formed on the one side and the other side of the core layer in the normal direction Ds is also called a build layer. The printed circuit board 100 of the present embodiment is the ten-layer build-up substrate in which two build layers are disposed on both of one side and the other side of the core layer, which is made up of six layers, in the normal direction Ds. The insulating layers 101 are made of an insulating material, for example, epoxy resin. The wiring layers 102 are made of a conductive material, for example, copper.

In the printed circuit board 100 of the present embodiment, the first receiver coil 120 and the second receiver coil 130 are formed in the wiring layers 102 excluding predetermined wiring layers 102 out of the ten wiring layers 102. As shown in FIG. 6, the first receiver coil 120 and the second receiver coil 130 are disposed inside the transmitter coil 110. Furthermore, in the printed circuit board 100 of the present embodiment, vias 140 that connect the wiring layers 102 are formed. The transmitter coil 110, the first receiver coil 120 and the second receiver coil 130 formed in the wiring layers 102 are appropriately connected through the vias 140. The vias 140 function as conductive penetrating portions that electrically connect the ten wiring layers 102. The shapes and connections of the first receiver coil 120 and the second receiver coil 130 formed in the wiring layers 102 will be described in detail later. The printed circuit board 100 has multiple pad portions (not shown). As shown in FIG. 5, one end portion of each terminal 400 having a rod shape is connected to the printed circuit board 100 to be connected to the pad portion.

As the terminals 400, for example, three terminals for power supply, ground, and output are provided. For example, the terminal 400 for output is connected to the ECU 4 and is used to output the rotation angle of the detection object to the ECU 4. The number of terminals 400 is not particularly limited, and the connection destinations can be changed appropriately depending on the number of terminals 400.

The circuit board 200 is disposed via a joining member (not shown) on a portion of the printed circuit board 100 which is different from portions where the transmitter coil 110, the first receiver coil 120, and the second receiver coil 130 are formed. The circuit board 200 is connected to the transmitter coil 110, the first receiver coil 120, and the second receiver coil 130 via the connection wire 150 provided in the printed circuit board 100.

The circuit board 200 includes a microcomputer including a CPU and storage units such as a ROM, a RAM, and a non-volatile RAM, or the like, and is connected to the transmitter coil 110, the first receiver coil 120, and the second receiver coil 130. The circuit board 200 realizes various control operations by the CPU reading and executing programs from the ROM or the non-volatile RAM. The ROM or the non-volatile RAM stores in advance various data (for example, initial values, look-up tables, maps, and the like) used when the programs are executed. A storage medium such as the ROM is a non-transient tangible storage medium. The CPU is an abbreviation for a Central Processing Unit, the ROM is an abbreviation for a Read Only Memory, and the RAM is an abbreviation for a Random Access Memory.

Specifically, as shown in FIG. 7, the circuit board 200 includes a signal processing unit 210 connected to the transmitter coil 110, the first receiver coil 120, and the second receiver coil 130 to perform predetermined processing. The signal processing unit 210 includes, for example, an oscillation unit 220, a demodulation unit 230, an AD conversion unit 240, an angle calculation unit 250, an output unit 260, and a power supply unit 300. In the following, a typical example will be described in which the signal is converted into a digital signal for processing. Meanwhile, in the case of processing with an analog signal, the signal processing unit 210 does not need to include the AD conversion unit 240 and the like.

As shown in FIGS. 4 and 5, the sealing member 500 integrally seals the printed circuit board 100, the circuit board 200, and the terminals 400, so that one end portion connected to the printed circuit board 100 in the terminals 400 and the other end portion on an opposite side are exposed. In the following, a portion of the sealing member 500 that is shaped as the arc plate along the shape of the printed circuit board 100 will be referred to as a main portion 510, and a portion that seals the terminals 400 and connects to an external connector will be referred to as a connector portion 520. The main portion 510 is formed along the shape of the printed circuit board 100, and at least an inner edge portion is formed to coincide an arc of a virtual circle formed around the shaft 10. The connector portion 520 is, for example, in the shape of a generally rectangular tube extending along the normal direction, and has an opening 520a that exposes the other end portions of the terminals 400 on the side opposite the main portion 510. The sealing member 500 is made of, for example, a thermosetting resin or a thermoplastic resin.

In the sealing member 500, a collar portion 530 into which a fastening member for being fixed to the fixing base 40 is inserted is provided in a stepped portion in both end portions in the circumferential direction of the main portion 510 having the arc plate shape. The collar portion 530 is configured by disposing a metallic collar 532 in a through hole 531 penetrating through the main portion 510 in the thickness direction. It is not necessary to provide the stepped portion in both end portions in the circumferential direction of the main portion 510, and shapes of both end portions of the main portion 510 can be appropriately changed to match a shape of side to be fixed.

The above-described configuration is the configuration of the position detection device S1 in the present embodiment. As shown in FIG. 2, the position detection device S1 is disposed in the fixing base 40 to face the rotating flat plate 30 in the axial direction Da. Specifically, as shown in FIGS. 2 and 3, the position detection device S1 is disposed as follows. When the rotating flat plate 30 is rotated, a state where the respective coils 110, 120, and 130 and the protrusion portion 32 of the rotating flat plate 30 face each other in the axial direction Da and a state where both of these do not face each other are alternately repeated.

### [Signal Processing Unit]

Next, an operation of the signal processing unit 210 in the above-described circuit board 200 will be described.

As shown in FIG. 7, the oscillation unit 220 is connected to both ends of the transmitter coil 110, and applies an alternating current of a predetermined frequency. For example, two capacitors 161 and 162 are connected in series between both ends of the transmitter coil 110 and the oscillation unit 220, and a portion connecting the capacitors 161 and 162 to each other is connected to ground. The transmitter coil 110 generates the magnetic field in the axial direction Da which passes through a region surrounded by the first receiver coil 120 and a region surrounded by the second receiver coil 130. However, a method for connecting the transmitter coil 110 and the oscillation unit 220 can be appropriately changed. For example, one capacitor may be disposed between both ends of the transmitter coil 110 and the oscillation unit 220.

The demodulation unit 230 is connected to both ends of the first receiver coil 120 and both ends of the second receiver coil 130. Then, the demodulation unit 230 generates a first demodulation signal by demodulating a first voltage value V1 of the first receiver coil 120, which will be described later, and generates a second demodulation signal by demodulating a second voltage value V2 of the second receiver coil 130, which will be described later.

The AD conversion unit 240 is connected to, for example, the demodulation unit 230 and the angle calculation unit 250. The AD conversion unit 240 outputs a first conversion signal S obtained by performing AD conversion on the first demodulation signal and a second conversion signal C obtained by performing AD conversion on the second demodulation signal, to the angle calculation unit 250.

The angle calculation unit 250 calculates the rotation angle of the rotating flat plate 30 by, for example, calculating an arctangent function using the first conversion signal S and the second conversion signal C.

The output unit 260 outputs, for example, the rotation angle of the rotating flat plate 30 obtained by the calculation in the angle calculation unit 250 to the terminal 400 for output.

The power supply unit 300 is connected to each of the units 220 to 260 of the signal processing unit 210, and supplies power to each of the units 220 to 260.

The basic configuration of the signal processing unit 210 has been described above.

Next, the first voltage value V1 of the first receiver coil 120 and the second voltage value V2 of the second receiver coil 130 when the rotating flat plate 30 is rotated will be described.

First, an alternating current of a predetermined frequency is applied from the oscillation unit 220 to the transmitter coil 110. Accordingly, electromagnetic induction is generated in the transmitter coil 110. Then, the generated electromagnetic induction causes inductive coupling between the transmitter coil 110 and the first and second receiver coils 120 and 130. Then, a magnetic field in the axial direction Da which passes through a region surrounded by the first receiver coil 120 and a region surrounded by the second receiver coil 130 is generated. In addition, since the magnetic field changes due to the alternating current, the first voltage value V1, which is an induced electromotive force generated in the first receiver coil 120, and the second voltage value V2, which is an induced electromotive force generated in the second receiver coil 130, change due to electromagnetic induction.

When the protrusion portion 32 of the rotating flat plate 30 faces the transmitter coil 110, the first receiver coil 120, and the second receiver coil 130, electromagnetic induction generates an eddy current, which is an induced current, in the protrusion portion 32, and a magnetic field is generated due to the eddy current. Therefore, in the magnetic fields in the axial direction Da which pass through the region surrounded by the first receiver coil 120 and the region surrounded by the second receiver coil 130, the magnetic field which passes through a portion facing the protrusion portion 32 is offset by the magnetic field caused by the eddy current. As a result, the first voltage value V1 generated in the first receiver coil 120 and the second voltage value V2 generated in the second receiver coil 130 change.

As described above, the plurality of protrusion portions 32 are arranged at an interval in the circumferential direction, and the depression portion 31 is provided between the adjacent protrusion portions 32. In this manner, an area facing the protrusion portion 32 is changed in conjunction with the rotation of the rotating flat plate 30, and a size of the portion facing the protrusion portion 32 in the magnetic fields in the axial direction Da which pass through the region surrounded by the first receiver coil 120 and the region surrounded by the second receiver coil 130 is periodically changed. Therefore, the first voltage value V1 generated in the first receiver coil 120 and the second voltage value V2 generated in the second receiver coil 130 in conjunction with the rotation of the rotating flat plate 30 are periodically changed. In this manner, the rotating flat plate 30 of the present embodiment changes the first voltage value V1 generated in the first receiver coil 120 and the second voltage value V2 generated in the second receiver coil 130 according to a rotation position of the rotating flat plate 30.

### [Details of the First Receiver Coil and the Second Receiver Coil]

Next, the shapes and connections of the first receiver coil 120 and the second receiver coil 130 formed in the wiring layers 102 will be described in detail. As described above, the printed circuit board 100 of the present embodiment is composed of the ten-layer build-up substrate. The first receiver coil 120 and the second receiver coil 130 are formed in the wiring layers 102 excluding predetermined wiring layers 102 among the ten wiring layers 102.

As shown in FIG. 6, the first receiver coil 120 and the second receiver coil 130 of the present embodiment are primary in a spiral shape, as shown in FIG. 6. The first receiver coil 120 includes a first forward spiral portion 121 and a first reverse spiral portion 122. The first forward spiral portion 121 and the first reverse spiral portion 122 are portions of the first receiver coil 120 that form spiral shapes. Furthermore, the second receiver coil 130 of the present embodiment includes a second forward spiral portion 131 and a second reverse spiral portion 132. The second forward spiral portion 131 and the second reverse spiral portion 132 are portions of the second receiver coil 130 that form spiral shapes.

The first forward spiral portion 121, the first reverse spiral portion 122, the second forward spiral portion 131 and the second reverse spiral portion 132 are formed side by side at a predetermined interval along the circumferential direction of the printed circuit board 100, which extends in the shape of the arc plate. Specifically, the first forward spiral portion 121, the second forward spiral portion 131, the first reverse spiral portion 122 and the second reverse spiral portion 132 are formed in the stated order from one side to the other side in the circumferential direction of the printed circuit board 100.

Each of the first forward spiral portion 121 and the first reverse spiral portion 122 has a spiral pattern shape formed so as to draw a rectangle while changing a diameter. In each of the first forward spiral portion 121 and the first reverse spiral portion 122, a coil is wound three turns in the same direction in each wiring layer 102, excluding two central wiring layers 102, among the ten wiring layers 102. However, winding directions (that is, spiral directions) of the coils of the first forward spiral portion 121 and the first reverse spiral portion 122 are opposite to each other. For example, the winding direction of the coil of the first forward spiral portion 121 is clockwise as viewed from the one side of the normal direction Ds. In contrast, the winding direction of the coil of the first reverse spiral portion 122 is counterclockwise as viewed from the one side of the normal direction Ds.

Similarly to the first forward spiral portion 121 and the first reverse spiral portion 122, each of the second forward spiral portion 131 and the second reverse spiral portion 132 has a spiral pattern shape formed so as to draw a rectangle while changing a diameter. In addition, in each of the second forward spiral portion 131 and the second reverse spiral portion 132, similarly to the first forward spiral portion 121 and the first reverse spiral portion 122, a coil is wound three turns in each wiring layer 102, excluding the two central wiring layers 102, among the ten wiring layers 102. However, winding directions of the second forward spiral portion 131 and the second reverse spiral portion 132 are opposite to each other. For example, the coil of the second forward spiral portion 131 is wound clockwise. In contrast, the coil of the second reverse spiral portion 132 is wound counterclockwise.

Moreover, the first forward spiral portion 121, the first reverse spiral portion 122, the second forward spiral portion 131 and the second reverse spiral portion 132 are formed in a plurality of wiring layers 102 among the wiring layers 102 of the ten-layer build-up substrate. The first forward spiral portion 121, the first reverse spiral portion 122, the second forward spiral portion 131 and the second reverse spiral portion 132 are formed such that the spiral portions formed in the respective wiring layers 102 overlap in the normal direction Ds.

For example, the first forward spiral portion 121 formed in the plurality of wiring layers 102 is formed such that the first forward spiral portion 121 formed in the respective wiring layers 102 overlaps with each other in the normal direction Ds. Furthermore, the first reverse spiral portion 122 formed in the plurality of wiring layers 102 is formed such that the first reverse spiral portion 122 formed in the respective wiring layers 102 overlaps with each other in the normal direction Ds. The second forward spiral portion 131 formed in the plurality of wiring layers 102 is formed such that the second forward spiral portion 131 formed in the respective wiring layers 102 overlaps with each other in the normal direction Ds. Furthermore, the second reverse spiral portion 132 formed in the plurality of wiring layers 102 is formed such that the second reverse spiral portion 132 formed in the respective wiring layers 102 overlaps with each other in the normal direction Ds.

Here, as shown in FIG. 8, the ten wiring layers 102 are referred to as a first wiring layer 1001, a second wiring layer 1002, a third wiring layer 1003, a fourth wiring layer 1004, a fifth wiring layer 1005, a sixth wiring layer 1006, a seventh wiring layer 1007, an eighth wiring layer 1008, a ninth wiring layer 1009, and a tenth wiring layer 1010 from the one side to the other side in the normal direction Ds.

In the present embodiment, the first forward spiral portion 121, the first reverse spiral portion 122, the second forward spiral portion 131 and the second reverse spiral portion 132 are formed in the same wiring layers 102 among the ten wiring layers 102. Specifically, the first forward spiral portion 121, the first reverse spiral portion 122, the second forward spiral portion 131 and the second reverse spiral portion 132 are formed in the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010. In other words, the first forward spiral portion 121, the first reverse spiral portion 122, the second forward spiral portion 131 and the second reverse spiral portion 132 are formed in the wiring layers 102, excluding the fifth wiring layer 1005 and the sixth wiring layer 1006, among the ten wiring layers 102.

Each of the first forward spiral portion 121, the first reverse spiral portion 122, the second forward spiral portion 131 and the second reverse spiral portion 132 is formed by winding the coil three turns in each of the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010. Therefore, the total number of turns of the coil of each of the first forward spiral portion 121, the first reverse spiral portion 122, the second forward spiral portion 131 and the second reverse spiral portion 132 in the present embodiment is twenty four.

Each of the first forward spiral portion 121, the first reverse spiral portion 122, the second forward spiral portion 131 and the second reverse spiral portion 132 formed in the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010 is connected by vias 140 formed in the printed circuit board 100.

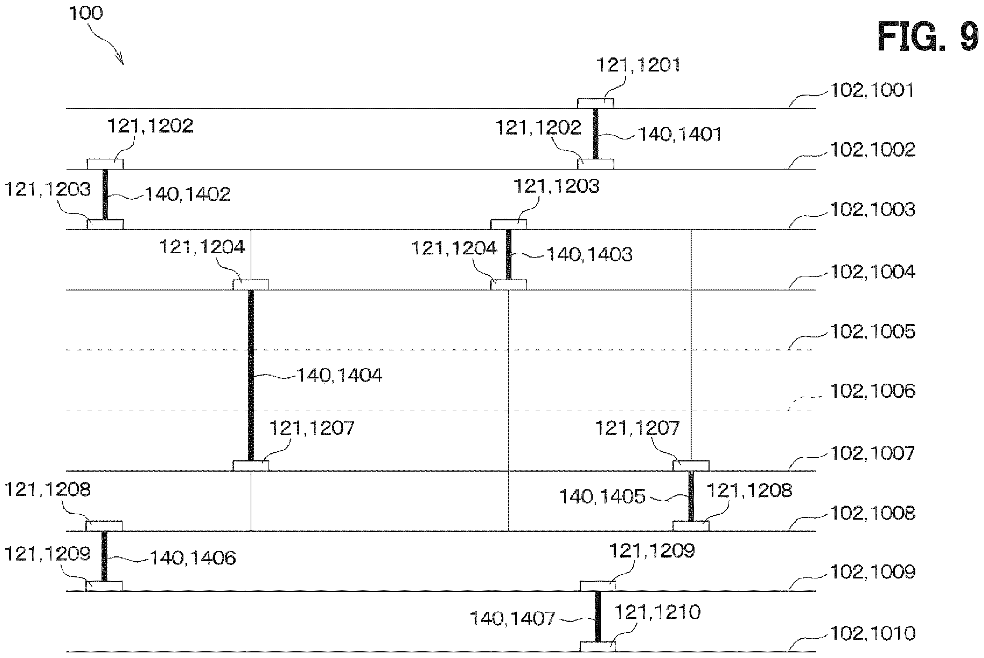

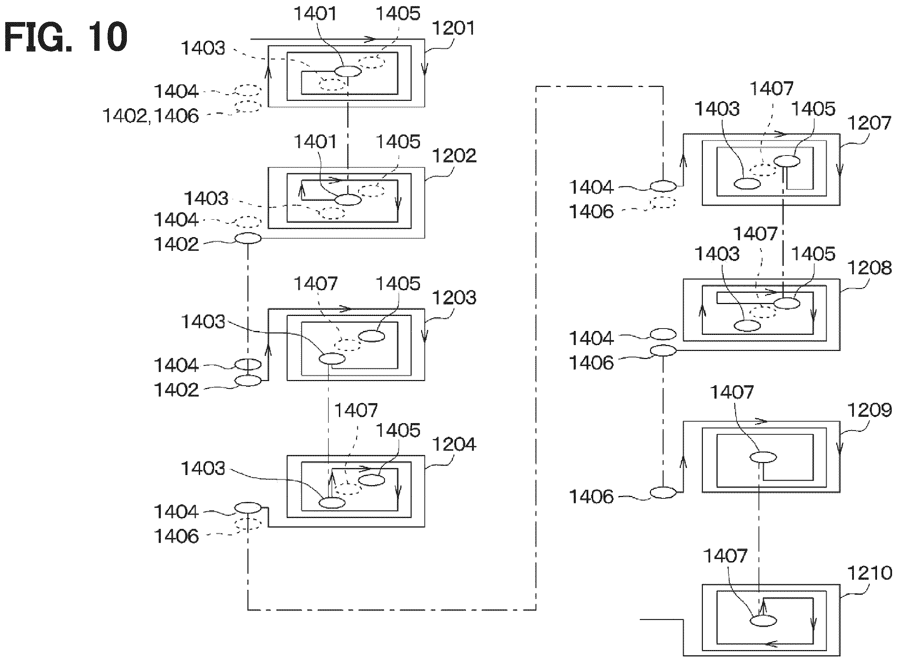

Here, a connection method of the first forward spiral portion 121 formed in each of the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010 is similar to a connection method of each of the first reverse spiral portion 122, the second forward spiral portion 131 and the second reverse spiral portion 132. For this reason, in the present embodiment, only the connection method of the first forward spiral portion 121 will be described in detail with reference to FIG. 9 and FIG. 10, and detailed descriptions of the connection methods of the first reverse spiral portion 122, the second forward spiral portion 131 and the second reverse spiral portion 132 will be omitted.

First, the vias 140 that connect the first forward spiral portion 121 will be described. As shown in FIG. 9, in the printed circuit board 100 of the present embodiment, seven vias 140 are formed to connect the first wiring layer 1001, the second wiring layer 1002, the third wiring layer 1003, the fourth wiring layer 1004, the fifth wiring layer 1005, the sixth wiring layer 1006, the seventh wiring layer 1007, the eighth wiring layer 1008, the ninth wiring layer 1009 and the tenth wiring layer 1010. Specifically, in the printed circuit board 100, a first via 1401 that connects the first wiring layer 1001 and the second wiring layer 1002, and a second via 1402 that connects the second wiring layer 1002 and the third wiring layer 1003 are formed. In addition, in the printed circuit board 100, a third via 1403, a fourth via 1404, and a fifth via 1405 that connect the third wiring layer 1003, the fourth wiring layer 1004, the fifth wiring layer 1005, and the sixth wiring layer 1006 are formed. Furthermore, in the printed circuit board 100, a sixth via 1406 that connects the eighth wiring layer 1008 and the ninth wiring layer 1009, and a seventh via 1407 that connects the ninth wiring layer 1009 and the tenth wiring layer 1010 are formed.

The first via 1401 is formed to penetrate one insulating layer 101 between the first wiring layer 1001 and the second wiring layer 1002 in the normal direction Ds. The second via 1402 is formed to penetrate one insulating layer 101 between the second wiring layer 1002 and the third wiring layer 1003 in the normal direction Ds. The third via 1403, the fourth via 1404 and the fifth via 1405 are formed to penetrate the five insulating layers 101 between the third wiring layer 1003 and the eighth wiring layer 1008 in the normal direction Ds. The sixth via 1406 is formed to penetrate one insulating layer 101 between the eighth wiring layer 1008 and the ninth wiring layer 1009 in the normal direction Ds. The seventh via 1407 is formed to penetrate one insulating layer 101 between the ninth wiring layer 1009 and the tenth wiring layer 1010 in the normal direction Ds.

That is, the vias 140 include the first via 1401, the second via 1402, the sixth via 1406 and the seventh via 1407 that are formed to penetrate one insulating layer 101. Furthermore, the vias 140 include the third via 1403, the fourth via 1404 and the fifth via 1405 that are formed to penetrate the five insulating layers 101. Each of the third via 1403, the fourth via 1404 and the fifth via 1405 serves as a first conductive portion formed to penetrate five insulating layers 101. Each of the first via 1401, the second via 1402, the sixth via 1406 and the seventh via 1407 serves as a second conductive portion formed to penetrate one insulating layer 101.

The first via 1401, the second via 1402, the sixth via 1406 and the seventh via 1407 are formed by copper plating holes created in the insulating layer 101 by a laser, for example, with respect to the build layer. The third via 1403, the fourth via 1404, and the fifth via 1405 are formed, for example, by copper plating in through holes formed through all of the wiring layers 102 and insulating layers 101 in the core layer composed of the six-layer through substrate. In FIG. 9, the insulating layers 101 between the wiring layers 102 are omitted for ease of viewing.

As shown in FIG. 6 and FIG. 9, the first via 1401 and the seventh via 1407 are formed at positions overlapping each other in the normal direction Ds. The first via 1401 and the seventh via 1407 are formed at positions overlapping with the second via 1402, the third via 1403, the fourth via 1404, the fifth via 1405, and the sixth via 1406 in the normal direction Ds.

The second via 1402 and the sixth via 1406 are formed at positions where they overlap each other in the normal direction Ds. The second via 1402 and the sixth via 1406 are formed at positions not overlapping with the third via 1403, the fourth via 1404, and the fifth via 1405 in the normal direction Ds.

The third via 1403, the fourth via 1404, and the fifth via 1405 are formed at positions not overlapping with each other in the normal direction Ds.

As shown in FIG. 6, the first via 1401, the second via 1402, the third via 1403, the fourth via 1404, the fifth via 1405, the sixth via 1406 and the seventh via 1407 are formed at positions not overlapping with the first forward spiral portion 121 in the normal direction Ds. Specifically, the first via 1401, the third via 1403, the fifth via 1405 and the seventh via 1407 are formed inside the spiral shape of the first forward spiral portion 121. In contrast, the second via 1402, the fourth via 1404 and the sixth via 1406 are formed outside the spiral shape of the first forward spiral portion 121. In other words, the first via 1401 to the seventh via 1407 are arranged alternately inside and outside the first forward spiral portion 121, with the vias 1401, 1403, 1405, and 1407 formed on the inside of the first forward spiral portion 121 and the vias 1402, 1404, and 1406 formed on the outside of the first forward spiral portion 121.

The first via 1401 in the present embodiment corresponds to an inside first-layer-to-second-layer conductive portion. The second via 1402 corresponds to an outside second-layer-to-third-layer conductive portion. The third via 1403 corresponds to an inside third-layer-to-fourth-layer conductive portion. The fourth via 1404 corresponds to an outside fourth-layer-to-seventh-layer conductive portion. The fifth via 1405 corresponds to an inside seventh-layer-to-eighth-layer conductive portion. The sixth via 1406 corresponds to an outside eighth-layer-to-ninth-layer conductive portion. The seventh via 1407 corresponds to an inside ninth-layer-to-tenth-layer conductive portion.

Next, a method of connecting the first forward spiral portion 121 formed in each of the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010 will be described. In the following description, the first forward spiral portion 121 formed in the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010 will also be referred to as a first spiral part 1201, a second spiral part 1202, a third spiral part 1203, a fourth spiral part 1204, a seventh spiral part 1207, an eighth spiral part 1208, a ninth spiral part 1209 and a tenth spiral part 1210, respectively.

In the first forward spiral portion 121, the parts formed in the respective wiring layer 102 are electrically connected by the first via 1401, the second via 1402, the third via 1403, the fourth via 1404, the fifth via 1405, the sixth via 1406 and the seventh via 1407. Specifically, as shown in FIG. 9, the first spiral part 1201 and the second spiral part 1202 are connected through the first via 1401. The second spiral part 1202 and the third spiral part 1203 are connected through the second via 1402. The third spiral part 1203 and the fourth spiral part 1204 are connected through the third via 1403. The fourth spiral part 1204 and the seventh spiral part 1207 are connected through the fourth via 1404. The seventh spiral part 1207 and the eighth spiral part 1208 are connected through the fifth via 1405. The eighth spiral part 1208 and the ninth spiral part 1209 are connected through the sixth via 1406. The ninth spiral part 1209 and the tenth spiral part 1210 are connected through the seventh via 1407.

As described above, in the present embodiment, the first spiral part 1201, the second spiral part 1202, the third spiral part 1203, the fourth spiral part 1204, the seventh spiral part 1207, the eighth spiral part 1208, the ninth spiral part 1209 and the tenth spiral portion 1210 are electrically connected through the first via 1401, the second via 1402, the third via 1403, the fourth via 1404, the fifth via 1405, the sixth via 1406 and the seventh via 1407.

The first spiral part 1201 and the second spiral part 1202 are connected by the first via 1401 formed inside the first forward spiral portion 121. The second spiral part 1202 and the third spiral part 1203 are connected by the second via 1402 formed outside the first forward spiral portion 121. The third spiral part 1203 and the fourth spiral part 1204 are connected by the third via 1403 formed inside the first forward spiral portion 121. The fourth spiral part 1204 and the seventh spiral part 1207 are connected by the fourth via 1404 formed outside the first forward spiral portion 121. The seventh spiral part 1207 and the eighth spiral part 1208 are connected by the fifth via 1405 formed inside the first forward spiral portion 121. The eighth spiral part 1208 and the ninth spiral part 1209 are connected by the sixth via 1406 formed outside the first forward spiral portion 121. The ninth spiral part 1209 and the tenth spiral part 1210 are connected by the seventh via 1407 formed inside the first forward spiral portion 121.

In this manner, the first forward spiral portion 121 formed in each wiring layer 102 is electrically connected by the first via 1401 to the seventh via 1407 formed alternately inside and outside the first forward spiral portion 121.

In addition, the first reverse spiral portion 122 formed in each wiring layer 102 is electrically connected by the first via 1401 to the seventh via 1407 formed alternately on the inside and outside of the first reverse spiral portion 122. The second forward spiral portion 131 formed in each wiring layer 102 is electrically connected by a first via 1401 to a seventh via 1407 formed alternately inside and outside the second forward spiral portion 131. The second reverse spiral portion 132 formed in each wiring layer 102 is electrically connected by a first via 1401 to a seventh via 1407 formed alternately inside and outside the second reverse spiral portion 132.

The reason why the first via 1401 to the seventh via 1407 are alternately formed inside and outside each of the first forward spiral portion 121, the first reverse spiral portion 122, the second forward spiral portion 131, and the second reverse spiral portion 132 will be explained using the first forward spiral portion 121. As described above, the first spiral part 1201, the second spiral part 1202, the third spiral part 1203, the fourth spiral part 1204, the seventh spiral part 1207, the eighth spiral part 1208, the ninth spiral part 1209 and the tenth spiral part 1210 have coils wound in the same direction (clockwise in the present embodiment). In addition, the first spiral part 1201, the second spiral part 1202, the third spiral part 1203, the fourth spiral part 1204, the seventh spiral part 1207, the eighth spiral part 1208, the ninth spiral part 1209 and the tenth spiral part 1210 are formed to overlap in the normal direction Ds.

Therefore, among the first spiral part 1201, the second spiral part 1202, the third spiral part 1203, the fourth spiral part 1204, the seventh spiral part 1207, the eighth spiral part 1208, the ninth spiral part 1209 and the tenth spiral part 1210, adjacent spiral parts are configured by alternately arranging a part wound clockwise from the outside toward the inside and a part would clockwise from the inside toward the outside.

For example, the first spiral part 1201 is formed by winding a coil from the outside toward the inside. In this case, the second spiral part 1202, which is formed in the second wiring layer 1002 adjacent to the first wiring layer 1001 in which the first spiral part 1201 is formed, is formed by winding a coil from the inside to the outside. The third spiral part 1203, which is formed in the third wiring layer 1003 adjacent to the second wiring layer 1002 in which the second spiral part 1202 is formed, is formed by winding a coil from the outside to the inside.

In the present embodiment, the first forward spiral portion 121 is formed in the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010, excluding the fifth wiring layer 1005 and the sixth wiring layer 1006, among the first wiring layer 1001 to the tenth wiring layer 1010.

In FIG. 9, each of the wiring layers 102, the first forward spiral portion 121, and the vias 140 are schematically shown to clarify the electrical connections between each of the wiring layers 102 and the first forward spiral portion 121. The wiring layers 102 in which the first forward spiral portion 121 is formed are indicated by solid lines, and the wiring layers 102 in which the first forward spiral portion 121 is not formed are indicated by dashed lines. Portions where the first spiral part 1201, the second spiral part 1202, the third spiral part 1203, the fourth spiral part 1204, the seventh spiral part 1207, the eighth spiral part 1208, the ninth spiral part 1209 and the tenth spiral part 1210 are electrically connected are indicated by thick lines.

In addition, in FIG. 10, in each of the wiring layers 102 in which the first forward spiral portion 121 is formed, the vias 140 that appear when viewed from the one side in the normal direction Ds are indicated by solid lines, and the vias 140 that do not appear are indicated by dashed lines. Moreover, the electrical connections between the vias 140 are indicated by dash-dotted lines.

Next, the reason why the first forward spiral portion 121 is not formed in the fifth wiring layer 1005 and the sixth wiring layer 1006 among the first wiring layer 1001 to the tenth wiring layer 1010 will be described.

If the first forward spiral portion 121 is formed in the fifth wiring layer 1005 and the sixth wiring layer 1006, it is necessary to add vias 140 to the printed circuit board 100 to connect the first forward spiral section 121 formed in the fifth wiring layer 1005 and the sixth wiring layer 1006.

Specifically, when forming the first forward spiral portion 121 in the fifth wiring layer 1005 and the sixth wiring layer 1006, the printed circuit board 100 requires a via 140 to connect the fourth spiral part 1204 and the first forward spiral portion 121 formed in the fifth wiring layer 1005. In addition, the printed circuit board 100 requires a via 140 to connect the first forward spiral portion 121 formed in the fifth wiring layer 1005 and the first forward spiral portion 121 formed in the sixth wiring layer 1006. Furthermore, the printed circuit board 100 requires a via 140 to connect the first forward spiral portion 121 formed in sixth wiring layer 1006 and the seventh spiral part 1207.

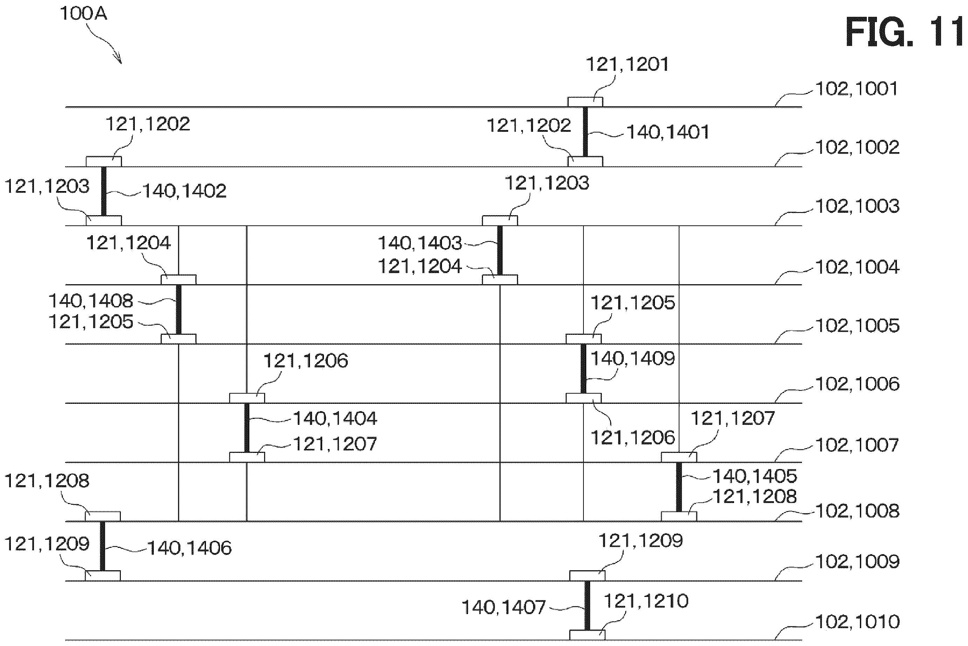

Here, a board in which the first forward spiral portion 121 is formed in the fifth wiring layer 1005 and the sixth wiring layer 1006 shown in FIG. 11 is referred to as comparative printed board 100A. In the comparative printed circuit board 100A, the first forward spiral portion 121 formed in the fifth wiring layer 1005 is referred to as a fifth spiral part 1205, and the first forward spiral portion 121 formed in the sixth wiring layer 1006 is referred to as a sixth spiral part 1206. A via 140 for connecting the fourth spiral part 1204 and the fifth spiral part 1205 is referred to as an eighth via 1408, and a via 140 for connecting the fifth spiral part 1205 and the sixth spiral part 1206 is referred to as a ninth via 1409. In a case where the eighth via 1408 and the ninth via 1409 are formed, the fourth via 1404 connects the sixth spiral part 1206 and the seventh spiral part 1207.

As shown in FIG. 11, the eighth via 1408 connecting the fourth spiral part 1204 and the fifth spiral part 1205 is formed, similarly to the third via 1403, the fourth via 1404 and the fifth via 1405, to penetrate the core layer composed of the six-layer through substrate. In addition, the ninth via 1409 connecting the fifth spiral part 1205 and the sixth spiral part 1206 is also formed, similarly to the third via 1403, the fourth via 1404 and the fifth via 1405, to penetrate the core layer composed of the six-layer through substrate.

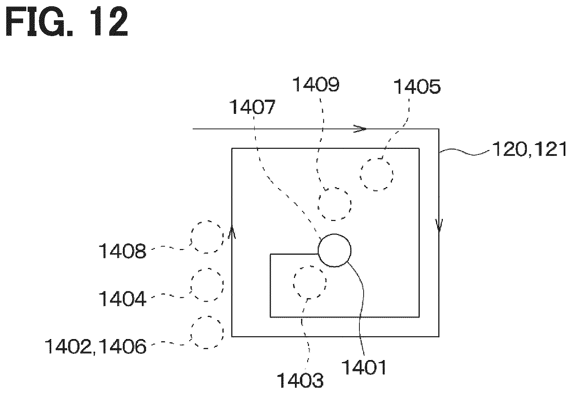

The first spiral part 1201 to the tenth spiral part 1210 need to be formed so as to overlap in the normal direction Ds. Then, the first via 1401 to the ninth via 1409 need to be formed at positions not overlapping with the first forward spiral portion 121 in the normal direction Ds, as shown in FIG. 12.

Furthermore, the first via 1401 to the ninth via 1409 need to be formed alternately inside and outside the first forward spiral portion 121, as described above. Therefore, the eighth via 1408, which is next to the third via 1403 formed inside the first forward spiral portion 121, is formed outside the first forward spiral portion 121 as shown in FIG. 12. Furthermore, the ninth via 1409, which is next to the eighth via 1408 formed outside the first forward spiral portion 121, is formed inside the first forward spiral portion 121.

Furthermore, when forming the first forward spiral portion 121 in all of the ten wiring layers 102 of the comparative printed circuit board 100A, the first forward spiral portion 121 needs to be formed in a position not overlapping with the first via 1401 to the ninth via 1409 in the normal direction Ds. This limits the surface area of the wiring layer 102 on which the first forward spiral portion 121 can be formed. Specifically, by adding the ninth via 1409 to the comparative printed circuit board 100A, the surface area available for forming a spiral coil inside the first forward spiral portion 121 in the wiring layer 102 is reduced. In other words, compared to the printed circuit board 100 of the present embodiment, the comparative printed circuit board 100A has a reduced surface area available for forming the first forward spiral portion 121 in the wiring layer 102.

As a result, by adding the ninth via 1409 inside the first forward spiral section 121, the comparative printed circuit board 100A has a reduced number of turns of the coil that can be formed inside the first forward spiral portion 121 compared to the printed circuit board 100 of the present embodiment. For example, by adding the ninth via 1409, the possible number of turns of the coil in the first forward spiral portion 121 is reduced from three to two. As a result, the first forward spiral portion 121 in the comparative printed circuit board 100A is configured by the coil wound twenty turns. In other words, the total number of turns of the coil that constitutes the first forward spiral portion 121 is twenty.

The first voltage value V1 generated in the first receiver coil 120 and the second voltage value V2 generated in the second receiver coil 130 with the rotation of the rotating flat plate 30 change according to the total number of turns of each of the coils of the first receiver coil 120 and the second receiver coil 130. Specifically, the first voltage value V1 and the second voltage value V2 increase with increase in the total number of turns of the coils of the first receiver coil 120 and the second receiver coil 130.

As a result, the comparative printed circuit board 100A, in which the total number of turns of the coil that constitutes the first forward spiral portion 121 is reduced compared to the printed circuit board 100 of the present embodiment, has smaller first voltage value V1 and second voltage value V2 compared to the printed circuit board 100 of the present embodiment.

In contrast, the position detection device S1 of the present embodiment includes the printed circuit board 100, which is the multilayer substrate with the ten wiring layers 102 and the insulating layers 101 alternately laminated between each of the ten wiring layers 102. The ten wiring layers 102 are electrically connected by the vias 140 formed to penetrate at least one insulating layer 101.

The first receiver coil 120 and the second receiver coil 130 are wound three turns in each of the first wiring layer 1001, the second wiring layer 1002, the third wiring layer 1003, the fourth wiring layer 1004, the seventh wiring layer 1007, the eighth wiring layer 1008, the ninth wiring layer 1009, and the tenth wiring layer 1010, excluding the fifth wiring layer 1005 and the sixth wiring layer 1006, among the ten wiring layers 102. The first receiver coil 120 and the second receiver coil 130 formed in each of the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010 are connected through the vias 140.

According to this configuration, it is possible to reduce the number of the vias 140 for connecting the first receiver coil 120 and the second receiver coil 130 compared to a case where the first receiver coil 120 and the second receiver coil 130 are formed in all of the ten wiring layers 102. Thus, in each wiring layer 102 in which the first receiver coil 120 and the second receiver coil 130 are formed, the surface area available for forming the first receiver coil 120 and the second receiver coil 130 can be increased.

Therefore, it is easier to increase the number of turns of the coils that constitute the first receiver coil 120 and the second receiver coil 130 in each of the wiring layers 102. Furthermore, by increasing the number of turns of the coils that constitute the first receiver coil 120 and the second receiver coil 130, the total number of turns of each of the coils of the first receiver coil 120 and the second receiver coil 130 in the entire printed circuit board 100 can be increased.

Furthermore, by increasing the total number of turns of the coils of each of the first receiver coil 120 and the second receiver coil 130, the first voltage value V1 generated in the first receiver coil 120 and the second voltage value V2 generated in the second receiver coil 130 can be increased.

### (Second Embodiment)

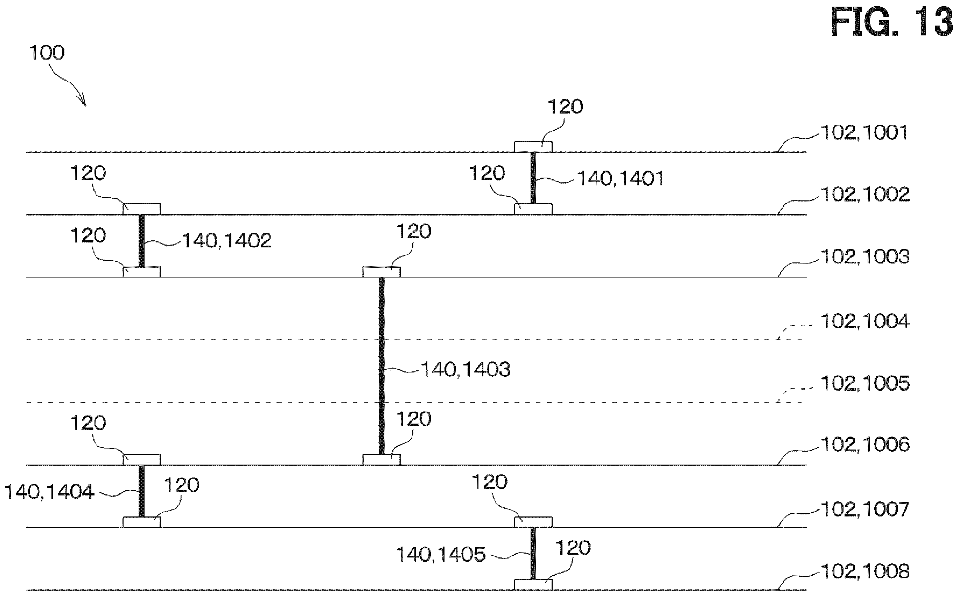

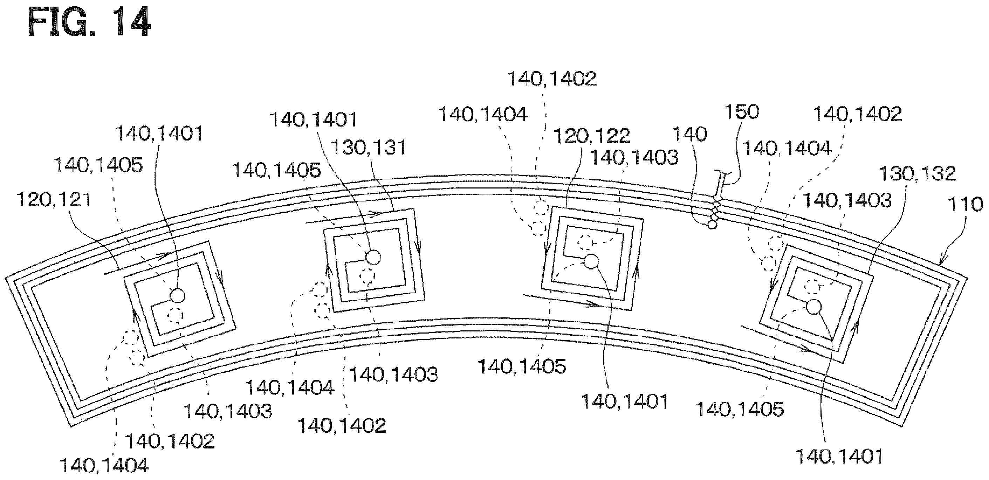

Next, a second embodiment will be described with reference to FIG. 13 and FIG. 14. In the present embodiment, the configuration of a printed circuit board 100 is different from that of the first embodiment. The other configurations are the same as those of the first embodiment. Therefore, in the present embodiment, portions different from the first embodiment will be mainly described, and description of portions similar to the first embodiment may be omitted.

The printed circuit board 100 of the present embodiment includes a four-layer through substrate in which insulating layers 101 and wiring layers 102 are alternately laminated. The printed circuit board 100 is composed of an eight-layer build-up substrate in which two insulating layers 101 and two wiring layers 102 are further laminated on both of one side and the other side of the through substrate in the normal direction Ds. The printed circuit board 100 of the present embodiment is an eight-layer build-up board in which two build layers are disposed on both of one side and the other side of a core layer, which is made up of four layers, in the normal direction Ds. As shown in FIG. 13, the printed circuit board 100 of the present embodiment includes a first wiring layer 1001 to an eighth wiring layer 1008.

Furthermore, in each of the eight wiring layers 102 of the printed circuit board 100 excluding two central wiring layers 102, the first receiver coil 120 and the second receiver coil 130 are wound three turns each in the same direction. That is, the first receiver coil 120 and the second receiver coil 130 are formed by being wound three turns each in the first wiring layer 1001, the second wiring layer 1002, the third wiring layer 1003, the sixth wiring layer 1006, the seventh wiring layer 1007 and the eighth wiring layer 1008, excluding the fourth wiring layer 1004 and the fifth wiring layer 1005.

In addition, in the printed circuit board 100, a first via 1401 that connects the first wiring layer 1001 and the second wiring layer 1002, and a second via 1402 that connects the second wiring layer 1002 and the third wiring layer 1003 are formed. Furthermore, in the printed circuit board 100, a third via 1403 that connects the third wiring layer 1003, the fourth wiring layer 1004, the fifth wiring layer 1005 and the sixth wiring layer 1006 is formed. Furthermore, in the printed circuit board 100, a fourth via 1404 that connects the sixth wiring layer 1006 and the seventh wiring layer 1007, and a fifth via 1405 that connects the seventh wiring layer 1007 and the eighth wiring layer 1008 are formed.

The first via 1401 is formed to penetrate one insulating layer 101 between the first wiring layer 1001 and the second wiring layer 1002 in the normal direction Ds. The second via 1402 is formed to penetrate one insulating layer 101 between the second wiring layer 1002 and the third wiring layer 1003 in the normal direction Ds. The third via 1403 is formed to penetrate three insulating layers 101 between the third wiring layer 1003 and the sixth wiring layer 1006 in the normal direction Ds. The fourth via 1404 is formed to penetrate one insulating layer 101 between the sixth wiring layer 1006 and the seventh wiring layer 1007 in the normal direction Ds. The fifth via 1405 is formed to penetrate one insulating layer 101 between the seventh wiring layer 1007 and the eighth wiring layer 1008 in the normal direction Ds.

That is, the vias 140 include the first via 1401, the second via 1402, the fourth via 1404 and the fifth via 1405 formed to penetrate one insulating layer 101, and the third via 1403 formed to penetrate three insulating layers 101. The third via 1403 serves as a first conductive portion formed by penetrating three insulating layers 101. The first via 1401, the second via 1402, the fourth via 1404 and the fifth via 1405 function as a second conductive portion formed by penetrating one insulating layer 101.

As shown in FIG. 13 and FIG. 14, the first via 1401 and the fifth via 1405 are formed at positions overlapping each other in the normal direction Ds. The first via 1401 and the fifth via 1405 are formed at positions not overlapping with the second via 1402, the third via 1403, and the fourth via 1404 in the normal direction Ds.

The second via 1402 is formed at a position not overlapping with the third via 1403 and the fourth via 1404 in the normal direction Ds.

The third via 1403 and the fourth via 1404 are formed at positions not overlapping with each other in the normal direction Ds.

The first via 1401, the second via 1402, the third via 1403, the fourth via 1404 and the fifth via 1405 are formed at positions not overlapping with the first receiver coil 120 and the second receiver coil 130 in the normal direction Ds, as shown in FIG. 14. Specifically, the first via 1401, the third via 1403 and the fifth via 1405 are formed inside the spiral shapes of the first receiver coil 120 and the second receiver coil 130. In contrast, the second via 1402 and the fourth via 1404 are formed outside the spiral shapes of the first receiver coil 120 and the second receiver coil 130. The first via 1401 to the fifth via 1405 are arranged alternately inside and outside each of the first receiver coil 120 and the second receiver coil 130, with the vias 1401, 1403, and 1405 formed inside and the vias 1402 and 1404 formed outside.

The first receiver coil 120 formed in the first wiring layer 1001, the second wiring layer 1002, the third wiring layer 1003, the sixth wiring layer 1006, the seventh wiring layer 1007 and the eighth wiring layer 1008 is electrically connected by the first via 1401 to the fifth via 1405 formed alternately inside and outside the first receiver coil 120. In addition, the second receiver coil 130 formed in the first wiring layer 1001, the second wiring layer 1002, the third wiring layer 1003, the sixth wiring layer 1006, the seventh wiring layer 1007 and the eighth wiring layer 1008 is electrically connected by the first vias 1401 to the fifth vias 1405 formed alternately inside and outside the second receiver coil 130.

For example, the first receiver coil 120 formed in the first wiring layer 1001 and the first receiver coil 120 formed in the second wiring layer 1002 are connected by the first via 1401 formed inside the first receiver coil 120. The first receiver coil 120 formed in the second wiring layer 1002 and the first receiver coil 120 formed in the third wiring layer 1003 are connected by the second via 1402 formed outside the first receiver coil 120. The first receiver coil 120 formed in the third wiring layer 1003 and the first receiver coil 120 formed in the sixth wiring layer 1006 are connected by the third via 1403 formed inside the first receiver coil 120. The first receiver coil 120 formed in the sixth wiring layer 1006 and the first receiver coil 120 formed in the seventh wiring layer 1007 are connected by the fourth via 1404 formed outside the first receiver coil 120. The first receiver coil 120 formed in the seventh wiring layer 1007 and the first receiver coil 120 formed in the eighth wiring layer 1008 are connected by the fifth via 1405 formed inside the first receiver coil 120.

According to this configuration, it is possible to reduce the number of the vias 140 for connecting the first receiver coil 120 and the second receiver coil 130 compared to a case where the first receiver coil 120 and the second receiver coil 130 are formed in all of the eight wiring layers 102. Thus, in each wiring layer 102 in which the first receiver coil 120 and the second receiver coil 130 are formed, the surface area available for forming the first receiver coil 120 and the second receiver coil 130 can be increased.

Therefore, it is easier to increase the number of turns of the coils that constitute the first receiver coil 120 and the second receiver coil 130 in each of the wiring layers 102. Furthermore, by increasing the number of turns of the coils that constitute the first receiver coil 120 and the second receiver coil 130, the total number of turns of each of the coils of the first receiver coil 120 and the second receiver coil 130 in the entire printed circuit board 100 can be increased.

Furthermore, by increasing the total number of turns of the coils that constitute each of the first receiver coil 120 and the second receiver coil 130, the first voltage value V1 generated in the first receiver coil 120 and the second voltage value V2 generated in the second receiver coil 130 can be increased.

### (Third Embodiment)

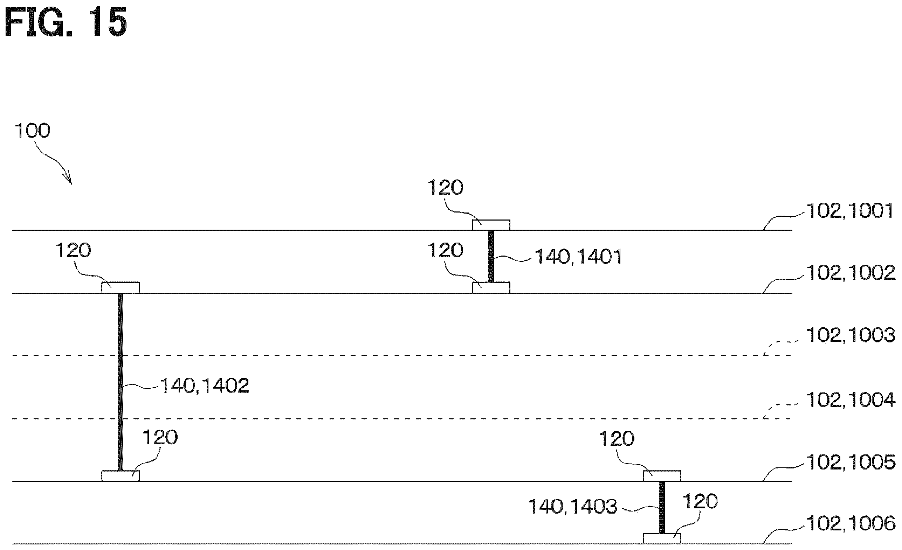

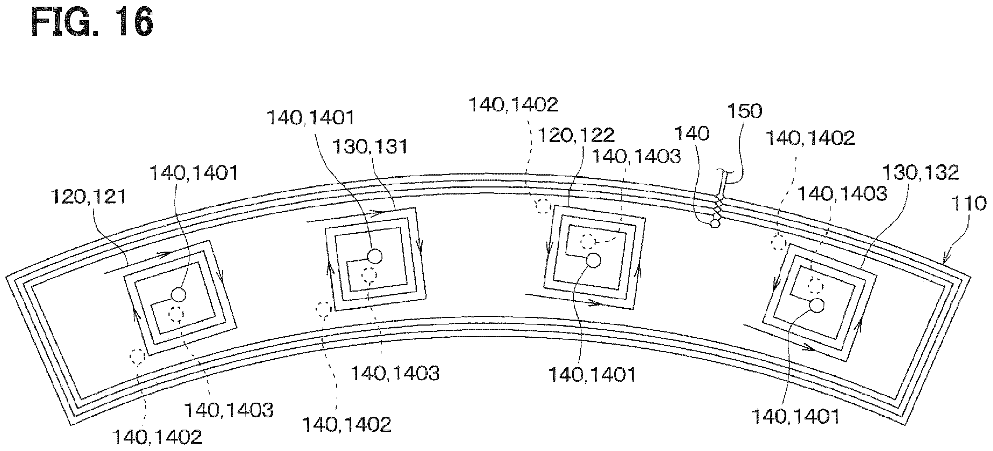

Next, a third embodiment will be described with reference to FIG. 15 and FIG. 16. In the present embodiment, the configuration of a printed circuit board 100 is different from that of the first embodiment. The other configurations are the same as those of the first embodiment. Therefore, in the present embodiment, portions different from the first embodiment will be mainly described, and description of portions similar to the first embodiment may be omitted.

The printed circuit board 100 of the present embodiment includes a four-layer through substrate in which insulating layers 101 and wiring layers 102 are alternately laminated. The printed circuit board 100 is composed of a six-layer build-up substrate in which one insulating layer 101 and one wiring layer 102 are further laminated on both of one side and the other side of the through substrate in the normal direction Ds. As shown in FIG. 15, the printed circuit board 100 of the present embodiment has a first wiring layer 1001 to a sixth wiring layer 1006.

Furthermore, in each of the six wiring layers 102 of the printed circuit board 100 excluding two central wiring layers 102, the first receiver coil 120 and the second receiver coil 130 are wound three turns each in the same direction. That is, the first receiver coil 120 and the second receiver coil 130 are formed by being wound three turns each in the first wiring layer 1001, the second wiring layer 1002, the fifth wiring layer 1005 and the sixth wiring layer 1006, excluding the third wiring layer 1003 and the fourth wiring layer 1004.

In addition, in the printed circuit board 100, a first via 1401 that connects the first wiring layer 1001 and the second wiring layer 1002, and a second via 1402 that connects the second wiring layer 1002, the third wiring layer 1003, the fourth wiring layer 1004 and the fifth wiring layer 1005 are formed. Furthermore, in the printed circuit board 100, a third via 1403 that connects the fifth wiring layer 1005 and the sixth wiring layer 1006 is formed.

The first via 1401 is formed to penetrate one insulating layer 101 between the first wiring layer 1001 and the second wiring layer 1002 in the normal direction Ds. The second via 1402 is formed to penetrate three insulating layers 101 between the second wiring layer 1002 and the fifth wiring layer 1005 in the normal direction Ds. The third via 1403 is formed to penetrate one insulating layer 101 between the fifth wiring layer 1005 and the sixth wiring layer 1006 in the normal direction Ds.

That is, the vias 140 include the first via 1401 and the third via 1403 formed to penetrate one insulating layer 101, and the second via 1402 formed to penetrate three insulating layers 101. The second via 1402 serves as a first conductive portion formed to penetrate the three insulating layers 101. The first via 1401 and the third via 1403 serves as a second conductive portion formed to penetrate one insulating layer 101.

The first via 1401, the second via 1402, and the third via 1403 are formed at positions not overlapping with each other in the normal direction Ds.

As shown in FIG. 16, the first via 1401, the second via 1402, and the third via 1403 are formed at positions not overlapping with the first receiver coil 120 and the second receiver coil 130 in the normal direction Ds. Specifically, the first via 1401 and the third via 1403 are formed inside the spiral shapes of the first receiver coil 120 and the second receiver coil 130. In contrast, the second via 1402 is formed outside the spiral shapes of the first receiver coil 120 and the second receiver coil 130. The first vias 1401 to the third vias 1403 are arranged alternately inside and outside the first receiver coil 120, with the vias 1401 and 1403 formed inside and the via 1402 formed outside.

The first receiver coil 120 and the second receiver coil 130 formed in the first wiring layer 1001, the second wiring layer 1002, the fifth wiring layer 1005 and the sixth wiring layer 1006 are electrically connected by the first vias 1401 to the third vias 1403 formed alternately inside and outside the first receiver coil 120.

For example, the first receiver coil 120 formed in the first wiring layer 1001 and the first receiver coil 120 formed in the second wiring layer 1002 are connected by the first via 1401 formed inside the first receiver coil 120. The first receiver coil 120 formed in the second wiring layer 1002 and the first receiver coil 120 formed in the fifth wiring layer 1005 are connected by the second via 1402 formed outside the first receiver coil 120. The first receiver coil 120 formed in the fifth wiring layer 1005 and the first receiver coil 120 formed in the sixth wiring layer 1006 are connected by the third via 1403 formed inside the first receiver coil 120.

According to this configuration, it is possible to reduce the number of the vias 140 for connecting the first receiver coil 120 and the second receiver coil 130 compared to a case where the first receiver coil 120 and the second receiver coil 130 are formed in all of the six wiring layers 102. Thus, in each wiring layer 102 in which the first receiver coil 120 and the second receiver coil 130 are formed, the surface area available for forming the first receiver coil 120 and the second receiver coil 130 can be increased.

Therefore, it is easier to increase the number of turns of the coils that constitute the first receiver coil 120 and the second receiver coil 130 in each of the wiring layers 102. Furthermore, by increasing the number of turns of the coils that constitute the first receiver coil 120 and the second receiver coil 130, the total number of turns of each of the coils of the first receiver coil 120 and the second receiver coil 130 in the entire printed circuit board 100 can be increased.

Furthermore, by increasing the total number of turns of the coils that constitute each of the first receiver coil 120 and the second receiver coil 130, the first voltage value V1 generated in the first receiver coil 120 and the second voltage value V2 generated in the second receiver coil 130 can be increased.

### (Fourth Embodiment)

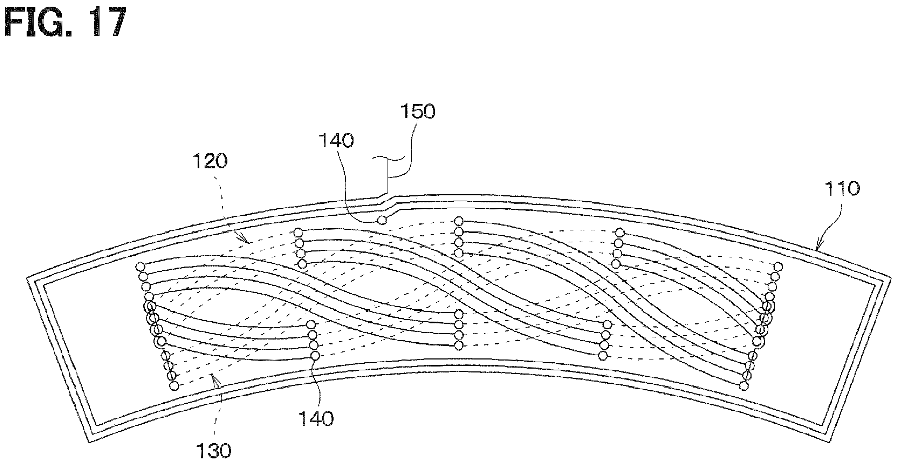

Next, a fourth embodiment will be described with reference to FIG. 17. In the present embodiment, pattern shapes of a first receiver coil 120 and a second receiver coil 130 are different from those in the first embodiment. The other configurations are the same as those of the first embodiment. Therefore, in the present embodiment, portions different from the first embodiment will be mainly described, and description of portions similar to the first embodiment may be omitted.

As shown in FIG. 17, the first receiver coil 120 and the second receiver coil 130 in the present embodiment are formed into arc frame shapes with the coils wound four turns in the normal direction Ds and with one direction (that is, a circumferential direction of the printed circuit board 100) as a longitudinal direction.

The first receiver coil 120 and the second receiver coil 130 are disposed inside the transmitter coil 110 in the normal direction Ds. Moreover, the first receiver coil 120 and the second receiver coil 130 are configured by appropriately connecting different wiring layers through vias 140 so as not to interfere with each other (that is, not to overlap in the same layer).

The first receiver coil 32 is formed in a pattern shape that draws a sine curve so as to have a sine wave shape in a closed loop. The first receiver coil 120, which is formed by winding the coil four turns, has each wound portion offset by a predetermined amount in an amplitude direction for each turn. The first receiver coil 120, which is formed by winding the coil four turns, has each wound portion connected in series and is formed in a single continuous line.

The second receiver coil 130 is formed in a pattern shape that draws a cosine curve so as to form a cosine wave in a closed loop. The second receiver coil 130, which is formed by winding the coil four turns, has each wound portion offset by a predetermined amount in an amplitude direction for each turn. The second receiver coil 130, which is formed by winding the coil four turns, has each wound portion connected in series and is formed in a single continuous line.

The first receiver coil 120 and the second receiver coil 130 formed by a plurality of turns may be formed with a phase difference. The first receiver coil 32 may be formed in a pattern shape that draws a cosine curve so as to have a cosine wave shape in a closed loop. In this case, the second receiver coil 130 is formed in a pattern shape that draws a sine curve so as to have a sine wave shape in a closed loop.

The first receiver coil 120 and the second receiver coil 130 are formed in the first wiring layer 1001, the second wiring layer 1002, the third wiring layer 1003, the fourth wiring layer 1004, the seventh wiring layer 1007, the eighth wiring layer 1008, the ninth wiring layer 1009 and the tenth wiring layer 1010 among the ten wiring layers 102. In other words, the first receiver coil 120 and the second receiver coil 130 are formed in the wiring layers 102, excluding the fifth wiring layer 1005 and the sixth wiring layer 1006, among the ten wiring layers 102.

Among the ten wiring layers 102, adjacent wiring layers 102 in which the first receiver coil 120 and the second receiver coil 130 are formed are connected to each other by vias 140.

For example, the first receiver coil 120 formed in the first wiring layer 1001 and the first receiver coil 120 formed in the second wiring layer 1002 are connected by a via 140 formed between the first wiring layer 1001 and the second wiring layer 1002. The first receiver coil 120 formed in the second wiring layer 1002 and the first receiver coil 120 formed in the third wiring layer 1003 are connected by a via 140 formed between the second wiring layer 1002 and the third wiring layer 1003. The first receiver coil 120 formed in the third wiring layer 1003 and the first receiver coil 120 formed in the fourth wiring layer 1004 are connected by a via 140 formed between the third wiring layer 1003 and the fourth wiring layer 1004.

The first receiver coil 120 formed in the fifth wiring layer 1005 and the first receiver coil 120 formed in the seventh wiring layer 1007 are connected by a via 140 formed to penetrate from the fifth wiring layer 1005 to the seventh wiring layer 1007.

The first receiver coil 120 formed in the seventh wiring layer 1007 and the first receiver coil 120 formed in the eighth wiring layer 1008 are connected by a via 140 formed between the seventh wiring layer 1007 and the eighth wiring layer 1008. The first receiver coil 120 formed in the eighth wiring layer 1008 and the first receiver coil 120 formed in the ninth wiring layer 1009 are connected by a via 140 formed between the eighth wiring layer 1008 and the ninth wiring layer 1009. The first receiver coil 120 formed in the ninth wiring layer 1009 and the first receiver coil 120 formed in the tenth wiring layer 1010 are connected by a via 140 formed between the ninth wiring layer 1009 and the tenth wiring layer 1010.

Note that, in FIG. 17, for clarity, the first receiver coil 120 and the second receiver coil 130, which are formed in the adjacent wiring layers 102 among the first wiring layer 1001 to the tenth wiring layer 1010, are indicated using solid and dashed lines.

According to this configuration, it is possible to reduce the number of the vias 140 for connecting the first receiver coil 120 and the second receiver coil 130 compared to a case where the first receiver coil 120 and the second receiver coil 130 are formed in all of the ten wiring layers 102. Thus, in each wiring layer 102 in which the first receiver coil 120 and the second receiver coil 130 are formed, the surface area available for forming the first receiver coil 120 and the second receiver coil 130 can be increased.

Therefore, it is easier to increase the number of turns of the coils that constitute the first receiver coil 120 and the second receiver coil 130 in each of the wiring layers 102. Furthermore, by increasing the number of turns of the coils that constitute the first receiver coil 120 and the second receiver coil 130, the total number of turns of each of the coils of the first receiver coil 120 and the second receiver coil 130 in the entire printed circuit board 100 can be increased.

Furthermore, by increasing the total number of turns of the coils that constitute each of the first receiver coil 120 and the second receiver coil 130, the first voltage value V1 generated in the first receiver coil 120 and the second voltage value V2 generated in the second receiver coil 130 can be increased.

### (Other Embodiments)

Although the representative embodiments of the present disclosure have been described above, the present disclosure is not limited to the embodiments described above, and can be variously modified as follows, for example.

In the above embodiment, an example has been described in which the position detection device S1 is applied to an electrification system mounted on a vehicle, but the present disclosure is not limited to this configuration. For example, the position detection device S1 may be mounted on something other than a vehicle.

In the above embodiment, the position detection device S1 detects the rotation angle of a rotating detection object, but the present disclosure is not limited to this configuration. For example, the position detection device S1 may detect the amount of displacement of a linearly moving detection body.

In the above-described embodiments, examples have been described in which the first receiver coil 120 and the second receiver coil 130 are wound two or three turns, but the number of turns is not limited to these examples. For example, the first receiver coil 120 and the second receiver coil 130 may be wound four or more turns.

In the above-described embodiments, the printed circuit board 100 is composed of the six-layer, eight-layer, or ten-layer build-up substrate, but the number of layers of the printed circuit board 100 is not limited to these examples. The number of layers of the printed circuit board 100 can be changed as appropriate.

In the above-described embodiments, examples have been described in which the printed circuit board 100 is the six-layer, eight-layer or ten-layer build-up substrate, and the first receiver coil 120 and the second receiver coil 130 are formed in the wiring layers 102 excluding the two central wiring layers 102, but the present disclosure is not limited to these examples. For example, the first receiver coil 120 and the second receiver coil 130 may be configured not to be formed in a wiring layer 102 different from the two central wiring layers 102 in a six-layer, eight-layer, or ten-layer build-up substrate. Furthermore, the first receiver coil 120 and the second receiver coil 130 may be configured not to be formed in one or three or more wiring layers 102 in a six-layer, eight-layer, or ten-layer build-up substrate.

In the embodiments described above, it is needless to say that the elements configuring the embodiments are not necessarily essential except in the case where those elements are clearly indicated to be essential in particular, the case where those elements are considered to be obviously essential in principle, and the like.

In the embodiments described above, when a numerical value such as the number, a numerical value, an amount, or a range of the constituent elements of the embodiment is referred to, the numerical value is not limited to specific numerical values unless otherwise specified as being essential or obviously limited to the specific numerical values in principle.

In each of the embodiments, when the shapes, positional relationships, and the like of the constituent elements and the like are referred to, the shapes, positional relationships, and the like are not limited thereto unless otherwise specified or limited to specific shapes, positional relationships, and the like in principle.

The control unit and the method thereof of the present disclosure may be implemented by a dedicated computer provided by configuring a memory and a processor programmed to execute one or a plurality of functions embodied by a computer program. The control unit and the method therefor of the present disclosure may be realized by a dedicated computer provided by including a processor with one or more dedicated hardware logic circuits. The control unit and the method therefor of the present disclosure may be realized by one or more dedicated computers, each including a combination of a processor and a memory that are programmed to execute one or more functions and a processor formed of one or more hardware logic circuits. The computer programs may be stored, as instructions to be executed by a computer, in a tangible non-transitory computer-readable medium.

### (Features of Present Invention)

### [First Aspect]

A position detection device includes a substrate (20), a transmitter coil (110) formed in the substrate, and a first receiver coil (120) and a second receiver coil (130) formed in the substrate and inductively coupled by electromagnetic induction caused by energization to the transmitter coil. The substrate is a multilayer substrate with six or more wiring layers (102, 1001 to 1010) and insulating layers (101) alternately arranged between each of the six or more wiring layers. The substrate includes a plurality of conductive penetrating portions (140, 1401 to 1407) each of which is formed to penetrate at least one of the insulating layers so that the plurality of conductive penetrating portions connect the six or more wiring layers. Each of the first receiver coil and the second receiver coil is wound a plurality of turns in each wiring layer, excluding at least one wiring layer, among the six or more wiring layers, and is connected through the plurality of conductive penetrating portions. At least one of the plurality of conductive penetrating portions is disposed inside each of the first receiver coil and the second receiver coil.

### [Second Aspect]

In the position detection device according to the first aspect, the substrate includes ten wiring layers, and each of the first receiver coil and the second receiver coil is wound a plurality of turns in each wiring layer, excluding at least one wiring layer, among the ten wiring layers.

### [Third Aspect]

In the position detection device according to the second aspect, the plurality of conductive penetrating portions include three first conductive portions (1403, 1404, 1405) formed to penetrate five of the insulating layers, and four second conductive portions (1401, 1402, 1406, 1407) formed to penetrate one of the insulating layers. At least one of the three first conductive portions is disposed inside each of the first receiver coil and the second receiver coil. At least one of the four second conductive portions is disposed inside each of the first receiver coil and the second receiver coil.

### [Fourth Aspect]

In the position detection device according to the third aspect, the ten wiring layers are referred to as a first wiring layer (1001), a second wiring layer (1002), a third wiring layer (1003), a fourth wiring layer (1004), a fifth wiring layer (1005), a sixth wiring layer (1006), a seventh wiring layer (1007), an eighth wiring layer (1008), a ninth wiring layer (1009), and a tenth wiring layer (1010) from one side to another side in a normal direction to a surface direction of the substrate. Each of the first receiver coil and the second receiver coil is wound the plurality of turns in each of the first wiring layer, the second wiring layer, the third wiring layer, the fourth wiring layer, the seventh wiring layer, the eighth wiring layer, the ninth wiring layer, and the tenth wiring layer, excluding the fifth wiring layer and the sixth wiring layer. The three first conductive portions formed in the substrate include an inside third-layer-to-fourth-layer conductive portion (1403), an outside fourth-layer-to-seventh-layer conductive portion (1404), and an inside seventh-layer-to-eighth-layer conductive portion (1405). The inside third-layer-to-fourth-layer conductive portion connects each of the first receiver coil and the second receiver coil formed in the third wiring layer and the fourth wiring layer, and is disposed inside each of the first receiver coil and the second receiver coil. The outside fourth-layer-to-seventh-layer conductive portion connects each of the first receiver coil and the second receiver coil formed in the fourth wiring layer and the seventh wiring layer, and is disposed outside each of the first receiver coil and the second receiver coil. The inside seventh-layer-to-eighth-layer conductive portion connects each of the first receiver coil and the second receiver coil formed in the seventh wiring layer and the eighth wiring layer, and is disposed inside each of the first receiver coil and the second receiver coil. The four second conductive portions formed in the substrate include an inside first-layer-to-second-layer conductive portion (1401), an outside second-layer-to-third-layer conductive portion (1402), an outside eighth-layer-to-ninth-layer conductive portion (1406), and an inside ninth-layer-to-tenth-layer conductive portion (1407). The inside first-layer-to-second-layer conductive portion connects each of the first receiver coil and the second receiver coil formed in the first wiring layer and the second wiring layer, and is disposed inside each of the first receiver coil and the second receiver coil. The outside second-layer-to-third-layer conductive portion connects each of the first receiver coil and the second receiver coil formed in the second wiring layer and the third wiring layer, and is disposed outside each of the first receiver coil and the second receiver coil. The outside eighth-layer-to-ninth-layer conductive portion connects each of the first receiver coil and the second receiver coil formed in the eighth wiring layer and the ninth wiring layer, and is disposed outside each of the first receiver coil and the second receiver coil. The inside ninth-layer-to-tenth-layer conductive portion connects each of the first receiver coil and the second receiver coil formed in the ninth wiring layer and the tenth wiring layer and is disposed inside each of the first receiver coil and the second receiver coil.

### [Fifth Aspect]

In the position detection device according to the fourth aspect, the inside first-layer-to-second-layer conductive portion and the inside ninth-layer-to-tenth-layer conductive portion are disposed at positions overlapping with each other in the normal direction, and the outside second-layer-to-third-layer conductive portion and the outside eighth-layer-to-ninth-layer conductive portion are disposed at positions overlapping with each other in the normal direction.

### [Sixth Aspect]

In the position detection device according to the first aspect, the substrate includes eight wiring layers, and each of the first receiver coil and the second receiver coil is wound the plurality of turns in each wiring layer, excluding at least one wiring layer, among the eight wiring layers.

### [Seventh Aspect]

In the position detection device according to the sixth aspect, the plurality of conductive penetrating portions include one first conductive portion (1403) formed to penetrate three of the insulating layers, and four second conductive portions (1401, 1402, 1404, 1405) formed to penetrate one of the insulating layers. The one first conductive portion is disposed inside each of the first receiver coil and the second receiver coil, and at least one of the four second conductive portions is disposed inside each of the first receiver coil and the second receiver coil.

### [Eighth Aspect]

In the position detection device according to the first aspect, the substrate includes six wiring layers, and each of the first receiver coil and the second receiver coil is wound the plurality of turns in each wiring layers, excluding at least one wiring layer, among the six wiring layers.

### [Ninth Aspect]

In the position detection device according to the eighth aspect, the plurality of conductive penetrating portions include one first conductive portion (1402) formed to penetrate three of the insulating layers, and two second conductive portions (1401, 1403) formed to penetrate one of the insulating layers. The one first conductive portion is disposed inside each of the first receiver coil and the second receiver coil, and at least one of the two second conductive portions is disposed inside each of the first receiver coil and the second receiver coil.

### [Tenth Aspect]

In the position detection device according to any one of the sixth to ninth aspects, each of the first receiver coil and the second receiver coil is formed in each wiring layer, excluding two central wiring layers, among the six or more wiring layers.

### [Eleventh Aspect]

In the position detection device according to any one of the first to tenth aspects, each of the first receiver coil and the second receiver coil includes a portion having a spiral pattern shape.

### [Twelfth Aspect]

In the position detection device according to any one of the first to tenth aspects, one of the first receiver coil and the second receiver coil has a pattern shape that draws a sine curve, and another of the first receiver coil and the second receiver coil has a pattern shape that draws a cosine curve.

### [Thirteenth Aspect]

The position detection device according to any one of the first to ninth aspect further includes a detection object (30) configured to generate an induced current by electromagnetic induction in response to an influence of the transmitter coil that is energized, and to change induced electromotive forces generated in the first receiver coil and the second receiver coil by the induced current that is generated.

### [Fourteenth Aspect]

The position detection device according to the thirteenth aspect further includes a signal processing unit (210) configured to calculate a position of the detection object based on the induced electromotive forces output by the first receiver coil and the second receiver coil.

## Claims

1. A position detection device comprising:
a substrate (20);
a transmitter coil (110) formed in the substrate; and
a first receiver coil (120) and a second receiver coil (130) formed in the substrate and inductively coupled by electromagnetic induction caused by energization to the transmitter coil, wherein
the substrate is a multilayer substrate with six or more wiring layers (102, 1001 to 1010) and insulating layers (101) alternately arranged between each of the six or more wiring layers, and the substrate includes a plurality of conductive penetrating portions (140, 1401 to 1407) each of which is formed to penetrate at least one of the insulating layers so that the plurality of conductive penetrating portions connect the six or more wiring layers,
each of the first receiver coil and the second receiver coil is wound a plurality of turns in each wiring layer, excluding at least one wiring layer, among the six or more wiring layers, and is connected through the plurality of conductive penetrating portions, and
at least one of the plurality of conductive penetrating portions is disposed inside each of the first receiver coil and the second receiver coil.

2. The position detection device according to claim 1, wherein
the substrate includes ten wiring layers, and
each of the first receiver coil and the second receiver coil is wound a plurality of turns in each wiring layer, excluding at least one wiring layer, among the ten wiring layers.

3. The position detection device according to claim 2, wherein
the plurality of conductive penetrating portions include three first conductive portions (1403, 1404, 1405) formed to penetrate five of the insulating layers, and four second conductive portions (1401, 1402, 1406, 1407) formed to penetrate one of the insulating layers,
at least one of the three first conductive portions is disposed inside each of the first receiver coil and the second receiver coil, and
at least one of the four second conductive portions is disposed inside each of the first receiver coil and the second receiver coil.

4. The position detection device according to claim 3, wherein
the ten wiring layers are referred to as a first wiring layer (1001), a second wiring layer (1002), a third wiring layer (1003), a fourth wiring layer (1004), a fifth wiring layer (1005), a sixth wiring layer (1006), a seventh wiring layer (1007), an eighth wiring layer (1008), a ninth wiring layer (1009), and a tenth wiring layer (1010) from one side to another side in a normal direction to a surface direction of the substrate,
each of the first receiver coil and the second receiver coil is wound the plurality of turns in each of the first wiring layer, the second wiring layer, the third wiring layer, the fourth wiring layer, the seventh wiring layer, the eighth wiring layer, the ninth wiring layer, and the tenth wiring layer, excluding the fifth wiring layer and the sixth wiring layer,
the three first conductive portions formed in the substrate include:
an inside third-layer-to-fourth-layer conductive portion (1403) that connects each of the first receiver coil and the second receiver coil formed in the third wiring layer and the fourth wiring layer, and is disposed inside each of the first receiver coil and the second receiver coil;
an outside fourth-layer-to-seventh-layer conductive portion (1404) that connects each of the first receiver coil and the second receiver coil formed in the fourth wiring layer and the seventh wiring layer, and is disposed outside each of the first receiver coil and the second receiver coil; and
an inside seventh-layer-to-eighth-layer conductive portion (1405) that connects each of the first receiver coil and the second receiver coil formed in the seventh wiring layer and the eighth wiring layer, and is disposed inside each of the first receiver coil and the second receiver coil, and
the four second conductive portions formed in the substrate include:
an inside first-layer-to-second-layer conductive portion (1401) that connects each of the first receiver coil and the second receiver coil formed in the first wiring layer and the second wiring layer, and is disposed inside each of the first receiver coil and the second receiver coil;
an outside second-layer-to-third-layer conductive portion (1402) that connects each of the first receiver coil and the second receiver coil formed in the second wiring layer and the third wiring layer, and is disposed outside each of the first receiver coil and the second receiver coil;
an outside eighth-layer-to-ninth-layer conductive portion (1406) that connects each of the first receiver coil and the second receiver coil formed in the eighth wiring layer and the ninth wiring layer, and is disposed outside each of the first receiver coil and the second receiver coil; and
an inside ninth-layer-to-tenth-layer conductive portion (1407) that connects each of the first receiver coil and the second receiver coil formed in the ninth wiring layer and the tenth wiring layer, and is disposed inside each of the first receiver coil and the second receiver coil.

5. The position detection device according to claim 4, wherein
the inside first-layer-to-second-layer conductive portion and the inside ninth-layer-to-tenth-layer conductive portion are disposed at positions overlapping with each other in the normal direction, and
the outside second-layer-to-third-layer conductive portion and the outside eighth-layer-to-ninth-layer conductive portion are disposed at positions overlapping with each other in the normal direction.

6. The position detection device according to claim 1, wherein
the substrate includes eight wiring layers, and
each of the first receiver coil and the second receiver coil is wound the plurality of turns in each wiring layer, excluding at least one wiring layer, among the eight wiring layers.

7. The position detection device according to claim 6, wherein
the plurality of conductive penetrating portions include one first conductive portion (1403) formed to penetrate three of the insulating layers, and four second conductive portions (1401, 1402, 1404, 1405) formed to penetrate one of the insulating layers,
the one first conductive portion is disposed inside each of the first receiver coil and the second receiver coil, and
at least one of the four second conductive portions is disposed inside each of the first receiver coil and the second receiver coil.

8. The position detection device according to claim 1, wherein
the substrate includes six wiring layers, and
each of the first receiver coil and the second receiver coil is wound the plurality of turns in each wiring layers, excluding at least one wiring layer, among the six wiring layers.

9. The position detection device according to claim 8, wherein
the plurality of conductive penetrating portions include one first conductive portion (1402) formed to penetrate three of the insulating layers, and two second conductive portions (1401, 1403) formed to penetrate one of the insulating layers,
the one first conductive portion is disposed inside each of the first receiver coil and the second receiver coil, and
at least one of the two second conductive portions is disposed inside each of the first receiver coil and the second receiver coil.

10. The position detection device according to any one of claims 6 to 9, wherein
each of the first receiver coil and the second receiver coil is formed in each wiring layer, excluding two central wiring layers, among the six or more wiring layers.

11. The position detection device according to any one of claims 1 to 9, wherein
each of the first receiver coil and the second receiver coil includes a portion having a spiral pattern shape.

12. The position detection device according to any one of claims 1 to 7, wherein
one of the first receiver coil and the second receiver coil has a pattern shape that draws a sine curve, and another of the first receiver coil and the second receiver coil has a pattern shape that draws a cosine curve.

13. The position detection device according to any one of claims 1 to 9, further comprising
a detection object (30) configured to generate an induced current by electromagnetic induction in response to an influence of the transmitter coil that is energized, and to change induced electromotive forces generated in the first receiver coil and the second receiver coil by the induced current that is generated.

14. The position detection device according to claim 13, further comprising
a signal processing unit (210) configured to calculate a position of the detection object based on the induced electromotive forces output by the first receiver coil and the second receiver coil.
